# EUROPEAN PATENT SPECIFICATION

(11) **EP 3 646 084 B1**
(45) Date of publication and mention of the grant of the patent: **29.03.2023**
(21) Application number: 18738181.9
(22) Date of filing: 28.06.2018
(51) Int. Cl.: G02B 6/38, G02B 6/44

(54) **MULTIPORTS AND OTHER DEVICES HAVING OPTICAL CONNECTION PORTS WITH SECURING FEATURES AND METHODS OF MAKING THE SAME**
MULTIPORTS UND ANDERE VORRICHTUNGEN MIT OPTISCHEN VERBINDUNGSANSCHLÜSSEN MIT BEFESTIGUNGSMERKMALEN UND HERSTELLUNGSVERFAHREN DAFÜR
MULTIPORTS ET AUTRES DISPOSITIFS À PORTS DE CONNEXION OPTIQUES À ÉLÉMENTS DE FIXATION ET LEURS PROCÉDÉS DE FABRICATION

(30) Priority: 28.06.2017 US 201762526011 P; 28.06.2017 US 201762526018 P; 28.06.2017 US 201762526195 P; 30.11.2017 WO PCT/US2017/063862; 30.11.2017 WO PCT/US2017/063938; 30.11.2017 WO PCT/US2017/063953; 30.11.2017 WO PCT/US2017/063991; 30.11.2017 WO PCT/US2017/064027; 30.11.2017 WO PCT/US2017/064071; 30.11.2017 WO PCT/US2017/064063; 30.11.2017 WO PCT/US2017/064072; 30.11.2017 WO PCT/US2017/064092; 30.11.2017 WO PCT/US2017/064095; 22.06.2018 US 201816015583; 22.06.2018 US 201816015588; 22.06.2018 WO PCT/US2018/039019; 22.06.2018 WO PCT/US2018/039020; 26.06.2018 US 201816018997; 26.06.2018 US 201816019008; 26.06.2018 WO PCT/US2018/039484; 26.06.2018 WO PCT/US2018/039485; 26.06.2018 WO PCT/US2018/039490; 26.06.2018 WO PCT/US2018/039494; 26.06.2018 US 201816018918; 26.06.2018 US 201816018988
(43) Date of publication of application: 06.05.2020
(60) Divisional application: 22205565.9
(73) Proprietor: Corning Research & Development Corporation, Corning, New York 14831 (US)
(72) Inventor: ROSSON, Joel Christopher, Hickory, North Carolina 28601 (US)
(74) Representative: Sturm, Christoph
(86) International application number: PCT/US2018/040104
(87) International publication number: WO 2019/006176

(56) References cited:
- WO-A1-2015/144883
- WO-A1-2016/156610
- US-A1- 2008 273 837
- US-A1- 2015 253 528

## Description

### CROSS-REFERENCE TO RELATED APPLICATIONS

This application claims the benefit of U.S. Application Nos. 62/526,011 filed on June 28, 2017; 62/526,018 filed on June 28, 2017; 62/526,195, filed on June 28, 2017; 16/018,918 filed on June 26, 2018; U.S. Patent Application Serial No. 16/018,988 filed on June 26, 2018; U.S. Application Serial No. 16/018,997 filed on June 26, 2018; U.S. Application Serial No. 16/019,008 filed June 26, 2018; U.S. Application Serial No. 16/015,583 filed June 22, 2018; and U.S. Application Serial No. 16/015,588 filed on June 22, 2018.

This applications also claims the benefit of priority under 35 USC §365 of International Patent Application Serial Nos. PCT/US2017/063862 filed on November 30, 2017; PCT/US2017/063938 filed on November 30, 2017; PCT/US2017/063953 filed on November 30, 2017; PCT/US2017/063991 filed on November 30, 2017; PCT/US2017/064027 filed on November 30, 2017; PCT/US2017/064071 filed on November 30, 2017; PCT/US2017/064063 filed on November 30, 2017; PCT/US2017/064072 filed on November 30, 2017; PCT/US2017/064092 filed on November 30, 2017; PCT/US2017/064095 filed on November 30, 2017; PCT/US2018/039484 filed on June 26, 2018; PCT/US2018/039485 filed on June 26, 2018; PCT/US2018/039490 filed on June 26, 2018; PCT/US2018/039494 filed on June 26, 2018; PCT/US2018/039019 filed on June 22, 2018; PCT/US2018/039020 filed on June 22, 2018.

### FIELD

The disclosure is directed to devices providing at least one optical connection port along with methods for making the same. More specifically, the disclosure is directed to devices such as multiports comprising a keyed-connection port and a securing feature associated with the connection port for securing an optical connector along with methods of making the same.

### BACKGROUND

Optical fiber is increasingly being used for a variety of applications, including but not limited to broadband voice, video, and data transmission. As bandwidth demands increase optical fiber is migrating deeper into communication networks such as in fiber to the premises applications such as FTTx, 5G and the like. As optical fiber extended deeper into communication networks the need for making robust optical connections in outdoor applications in a quick and easy manner was apparent. To address this need for making quick, reliable, and robust optical connections in communication networks hardened fiber optic connectors such as the OptiTap^{®} plug connector were developed.

Multiports were also developed for making an optical connections with hardened connectors such as the OptiTap^{®}. Prior art multiports have a plurality of receptacles mounted through a wall of the housing for protecting an indoor connector inside the housing that makes an optical connection to the external hardened connector of the branch or drop cable.

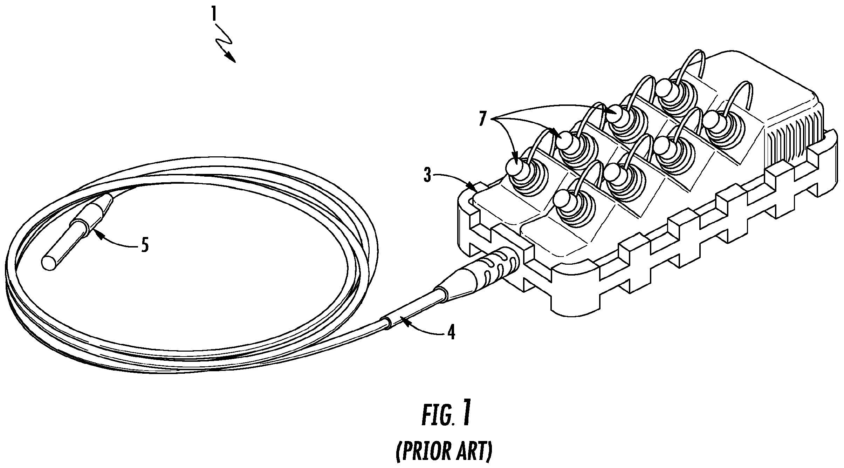

Illustratively, FIG. 1 shows a conventional fiber optic multiport 1 having an input fiber optic cable 4 carrying one or more optical fibers to indoor-type connectors inside a housing 3. The multiport 1 receives the optical fibers into housing 3 and distributes the optical fibers to receptacles 7 for connection with a hardened connector. The receptacles 7 are separate assemblies attached through a wall of housing 3 of the multiport 1. The receptacles 7 allow mating with hardened connectors attached to drop or branching cables (not shown) such as drop cables for "fiber-to-the-home" applications. During use, optical signals pass through the branch cables, to and from the fiber optic cable 4 by way of the optical connections at the receptacles 7 of multiport 1. Fiber optic cable 4 may also be terminated with a fiber optic connector 5. Multiports 1 allowed quick and easy deployment for optical networks.

Although, the housing 3 of the prior art multiport 1 is rugged and weatherable for outdoor deployments, the housings 3 of multiport 1 are relatively bulky for mounting multiple receptacles 7 for the hardened connector on the housing 3. Receptacles 7 allow an optical connection between the hardened connector such as the OptiTap^{®} male plug connector on the branch cable with a non-hardened connector such as the SC connector disposed within the housing 3, which provides a suitable transition from an outdoor space to a protected space inside the housing 3.

Receptacle 7 for the OptiTap^{®} connector is described in further detail in US 6,579,014 B2. As depicted in US 6,579,014 B2, the receptacle includes a receptacle housing and an adapter sleeve disposed therein. Thus, the receptacles for the hardened connector are large and bulky and require a great deal of surface array when arranged in an array on the housing 3 such as shown with multiport 1. Further, conventional hardened connectors use a separate threaded or bayonet coupling that requires rotation about the longitudinal axis of the connector and room for grabbing and rotating the coupling by hand when mounted in an array on the housing 3.

Consequently, the housing 3 of the multiport 1 is excessively bulky. For example, the multiport 1 may be too boxy and inflexible to effectively operate in smaller storage spaces, such as the underground pits or vaults that may already be crowded. Furthermore, having all of the receptacles 7 on the housing 3, as shown in **FIG. 1**, requires sufficient room for the drop or branch cables attached to the hardened connectors attached to the multiport 1. While pits can be widened and larger storage containers can be used, such solutions tend to be costly and timeconsuming. Network operators may desire other deployment applications for multiports 1 such as aerial, in a pedestal or mounted on a facade of a building that are not ideal for the prior art multiports 1 for numerous reasons such as congested poles or spaces or for aesthetic concerns.

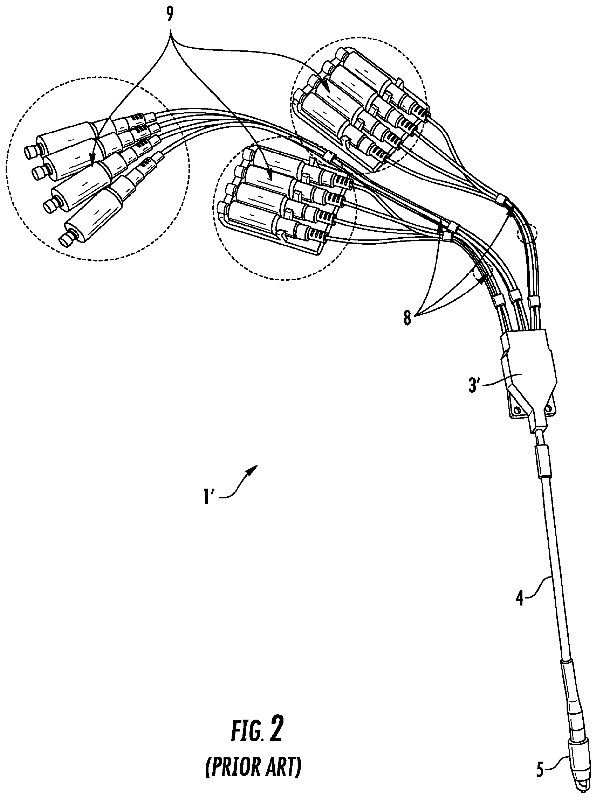

Other multiports designs have been commercialized to address the drawbacks of the prior art multiports depicted in **FIG. 1**. By way of explanation, US 2015/0268434 A1 discloses multiports 1' having one or more connection ports 9 positioned on the end of extensions 8 that project from the housing of the multiport 1' such as depicted in **FIG. 2**. Connection ports 9 of multiport 1' are configured for mating directly with a hardened connector (not shown) such as an OptiTap^{®} without the need to protect the receptacle 7 within a housing like the prior art multiport 1 of **FIG. 1****.**

Although, these types of multiport designs such as shown in FIG. 2 and disclosed in US 2015/0268434 A1 allow the device to have smaller footprints for the housing 3', these designs still have concerns such as the space consumed by the relatively large ports 9 and associated space requirements of optical connections between the ports and hardened connector of the drop cables along with organizational challenges. Simply stated, the ports 9 on the extensions 8 of the multiport 1' and the optical connections between ports 9 and hardened connector occupy significant space at a location a short distance away from the multiport housing 3' such as within a buried vault or disposed on a pole. In other words, a cluster of optical ports 9 of multiport 1' are bulky or occupy limited space. The conventional hardened connectors used with multiport 1' also use a separate threaded or bayonet coupling that requires rotation about the longitudinal axis of the connector along with sufficient space for grabbing and rotating the coupling means by hand. Further, there are aesthetic concerns with the prior art multiports 1' as well.

Consequently, there exists an unresolved need for multiports that allow flexibility for the network operators to quickly and easily make optical connections in their optical network while also addressing concerns related to limited space, organization, or aesthetics.

WO 2015/144883 A1 discloses a hybrid connector that is received in hybrid adapter. A slide clip is slidably mounted on the outer part of connector housing using rails on the slide clip that cooperate with channels of the outer part of connector housing for securing the hybrid connector. The slide clip is disposed on the exterior-side of the port. The hybrid adapter requires slide clip to be slidably mounted to an outer end of the outer part using rails that slide within corresponding channels defined by the outer part of the connector housing.

WO 2016/156610 A1 is direct to an enclosure having connector port that extend through a wall of the enclosure. Sleeves are formed in the enclosure wall and define fastening structure for the external connectors that may be attached to the connector port. For instance, the sleeves may have threads or bayonet features for attaching the external connector to the connector port.

US 2008/0273837 A1 is directed to an optical fiber interconnect system with the adapter using a push-pull interconnect mechanism with a slider.

### SUMMARY

The disclosure is directed to devices comprising a plurality of connection ports and a plurality of securing features associated with the connection port. The devices are multiports. Methods of making the devices are also disclosed. The devices can have any suitable construction such as disclosed herein such a connection port that is keyed for inhibiting a non-compliant connector from being inserted and potentially causing damage to the device.

The invention provides a multiport according to claim 1.

Additional features and advantages will be set forth in the detailed description which follows, and in part will be readily apparent to those skilled in the art from that description or recognized by practicing the same as described herein, including the detailed description that follows, the claims, as well as the appended drawings.

It is to be understood that both the foregoing general description and the following detailed description present embodiments that are intended to provide an overview or framework for understanding the nature and character of the claims. The accompanying drawings are included to provide a further understanding of the disclosure, and are incorporated into and constitute a part of this specification. The drawings illustrate various embodiments and together with the description serve to explain the principles and operation.

### BRIEF DESCRIPTION OF THE FIGURES

**FIGS. 1** **and** **2** are prior art multiports;
**FIGS. 3** **and** **4** respectively are top and bottom perspectives view of an assembled device such as an explanatory multiport comprising at least one connection port defined by a respective optical connector opening disposed in the shell of the multiport along with a securing feature associated with the connection port passageway;
**FIG. 5** depicts a longitudinal sectional view of the multiport of **FIGS. 3** **and** **4** through the connection port for showing the internal construction of the multiport with the rear (internal) connector shown and the optical fibers removed for clarity;
**FIGS. 6** **and** **7** are detailed sectional views of the multiport of **FIGS. 3** **and** **4** through the connection port for showing the internal construction of the multiport with the rear (internal) connectors shown and the optical fibers removed for clarity;
**FIG. 8** is a partially exploded view of the multiport of **FIGS. 3** **and** **4** with the optical fibers assembly comprising an optical splitter;
**FIGS. 9** **and** **10** respectively are assembled front and rear perspective views of the modular adapter sub-assembly comprising an adapter and a portion of the securing feature for cooperation with one connection port of the device of **FIGS. 3** **and** **4** with the rear connector attached;
**FIG. 11** is an exploded view of the modular adapter sub-assembly of **FIGS. 9** **and** **10** along with the rear connector;
**FIG. 12** is a longitudinal sectional view of the modular adapter sub-assembly of **FIGS. 9** **and** **10** with the rear connector attached;
**FIGS. 13** **and** **14** are top perspective views from different directions of a second portion of the shell of the multiport of **FIGS. 3** **and** **4**;
**FIG. 15** is a front perspective view of the second portion of the shell depicted in **FIGS. 13** **and** **14**;
**FIG. 16** is a detailed perspective view of the second portion of shell showing the mounting features for modular adapter sub-assembly of **FIGS. 9** **and** **10**;
**FIG. 17** is a top perspective view of the modular adapter sub-assemblies loaded into the second portion of the shell with the optical fibers removed for clarity;
**FIG. 18** is an inside perspective view of the first portion of the shell;
**FIGS. 19 and 20** depict perspective views showing the details of the actuator of the securing feature of the multiport of **FIGS. 3** **and** 4 that cooperates with the securing member of **FIGS. 21-23**;
**FIGS. 21-23** are various perspective views showing the details of the securing member of the securing feature of the multiport of **FIGS. 3** **and** **4** that cooperates with the actuator of **FIGS. 19 and 20**;
**FIG. 24-27** are various perspective views showing the details of the adapter body of the modular adapter sub-assembly of **FIGS. 9-12**;
**FIGS. 28 and 29** are perspective views of the adapter of the modular adapter sub-assembly of **FIGS. 9-12**.
**FIG. 30** is perspective view of the retainer of the modular adapter sub-assembly of **FIGS. 9-12**;
**FIGS. 31 and 32** are perspective views of a keeper of the modular adapter sub-assembly of **FIGS. 9-12**;
**FIG. 33** is a partially exploded view of another explanatory multiport with the optical fibers removed for clarity that is similar to the multiport of **FIGS. 3** **and** **4**;
**FIG. 34** is an exploded view of the modular adapter sub-assembly of the multiport of **FIG. 33**;
**FIG. 35** is a perspective view of the modular adapter sub-assembly of **FIG. 34**;
**FIG. 36** is a longitudinal sectional view of the modular adapter sub-assembly of **FIG. 35**;
**FIG. 37** is a detailed top perspective view of the modular adapter sub-assemblies of **FIG. 35** being loaded into the second portion of the shell with the optical fibers removed for clarity;
**FIG. 38** is a detailed perspective view showing how the features of the modular sub-assemblies of **FIG. 35** engage the first portion of the shell when assembled;
**FIG. 39** is a detailed sectional view of the multiport of **FIGS**. **33** through the connection port for showing the internal construction of the multiport with a fiber optic connector retained using the securing feature;
**FIGS. 40A and 40B** depict perspective views of a input tether and the input tether as part of the multiports disclosed;
**FIGS. 41-43** depict various views of a mounting feature insert that may be attached to the bottom of the second portion of the shell for use with the devices disclosed;
**FIGS. 44-46** depict various views of a mounting tab that may be attached to the front end of the second portion of the shell for use with the devices disclosed; and
**FIGS. 47 and 48** depict views of a dust cap for the connection ports of the devices disclosed;
**FIG. 49** is a perspective view of a wireless device not covered by the present invention comprising at least one connector port and a securing member; and
**FIG. 50** is a perspective view of a closure not covered by the present invention comprising at least one connector port and a securing member.

### DETAILED DESCRIPTION

Reference will now be made in detail to the embodiments of the disclosure, examples of which are illustrated in the accompanying drawings. Whenever possible, like reference numbers will be used to refer to like components or parts.

The concepts for the devices disclosed herein are suitable for providing at least one optical connection to the device for indoor, outdoor or other environments as desired. Generally speaking, the devices disclosed and explained in the exemplary embodiments are multiports, but the concepts disclosed may be used with any suitable device as appropriate. As used herein, the term "multiport" means any device comprising a plurality of connection ports for making an optical connection and a plurality of securing features with each securing feature associated with the respective connection port.

The concepts disclosed advantageously allow compact form-factors for devices such as multiports comprising a plurality of connection ports and a plurality of securing features each securing feature associated with the respective connection port. The concepts are scalable to any suitable count of connection ports on a device in a variety of arrangements or constructions. The securing features disclosed herein for devices engage directly with a portion of connector without conventional structures like prior art devices that require the turning of a coupling nut, bayonet or the like.. As used herein, "securing feature" excludes threads and features that cooperate with bayonets on a connector. Thus, the devices disclosed may allow connection ports to be closely spaced together and may result in small devices since the room needed for turning a threaded coupling nut or bayonet is not necessary. The compact form-factors may allow the placement of the devices in tight spaces in indoor, outdoor, buried, aerial, industrial or other applications while providing a plurality of connection ports that are advantageous for a robust and reliable optical connection in a removable and replaceable manner. The disclosed devices may also be aesthetically pleasing and provide organization for the optical connections in manner that the prior art multiports cannot provide.

The devices disclosed are simple and elegant in their designs. The devices disclosed comprise a plurality of connection ports and a plurality of securing features each securing feature associated with the respective connection port that is suitable for retaining an external fiber optic connector received by the connection port. The connection port may include a keying portion that cooperates with a key on a complimentary external fiber optic connector to inhibit damage to the connection port by inhibiting the insertion of a non-compliant connector. The keying portion may also aid the user during blind insertion of the connector into the connection port of the device to determine the correct rotational orientation with respect to the connection port when a line of sight is not possible or practical for alignment.

Unlike prior art multiports, the concepts disclosed advantageously allow the quick and easy connection and retention by inserting the fiber optic connectors directly into the connection port of the device without the need or space considerations for turning a threaded coupling nut or bayonet for retaining the external fiber optic connector. Generally speaking, the securing features disclosed for use with devices comprises one or more components with at least one component translating for releasing or securing the external fiber optic connector to the device. As used herein, the term "securing feature" excludes threaded portions or features for securing a bayonet disposed on a connector.

Since the connector footprint used with the devices disclosed does not require the bulkiness of a coupling nut or bayonet, the fiber optic connectors used with the devices disclosed herein may be significantly smaller than conventional connectors used with prior art multiports. Moreover, the present concepts for connection ports on devices allows an increased density of connection ports per volume of the shell or increased port width density since there is no need for accessing and turning the coupling nut or bayonets by hand for securing a fiber optic connector like the prior art multiports.

The devices disclosed comprise a securing feature for directly engaging with a suitable portion of a connector housing of the external fiber optic connector or the like for securing an optical connection with the device. Different variations of the concepts are discussed in further detail below. The structure for securing the fiber optic connectors in the devices disclosed allows much smaller footprints for both the devices and the fiber optic connectors along with a quick-connect feature. Devices may also have a dense spacing of connection ports if desired. The devices disclosed advantageously allow a relatively dense and organized array of connection ports in a relatively small form-factor while still being rugged for demanding environments. As optical networks increase densifications and space is at a premium, the robust and small-form factors for devices such as multiports, closures and wireless devices disclosed herein becomes increasingly desirable for network operators.

The concepts disclosed herein are suitable for optical distribution networks such as for Fiber-to-the-Home and 5G applications, but are equally applicable to other optical applications as well including indoor, automotive, industrial, wireless, or other suitable applications. Additionally, the concepts disclosed may be used with any suitable fiber optic connector footprint that cooperates with the securing feature of the device. Various designs, constructions, or features for devices are disclosed in more detail as discussed herein and may be modified or varied as desired.

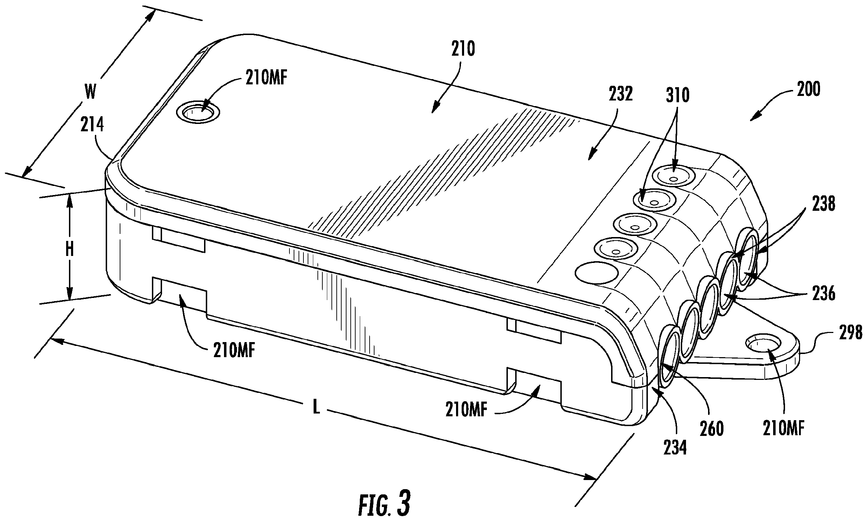

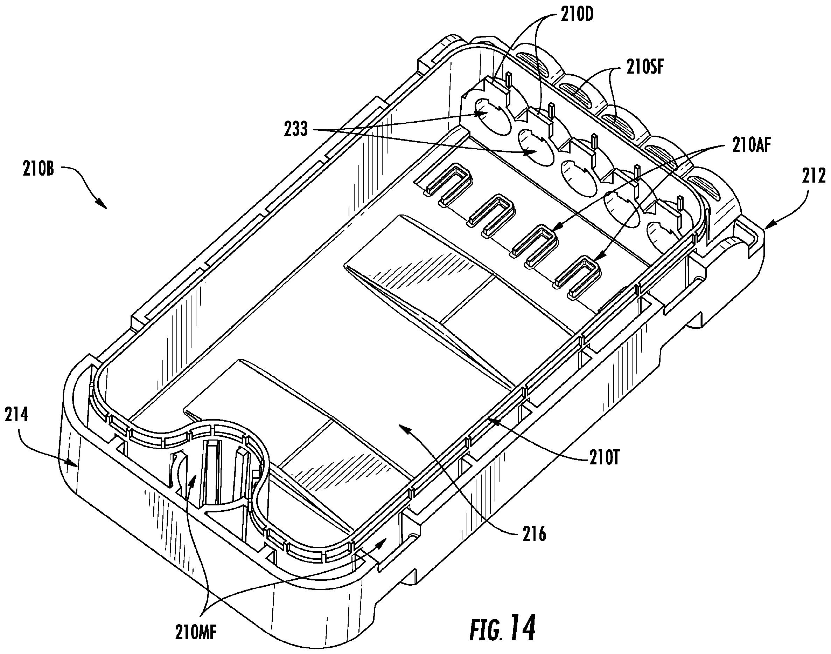

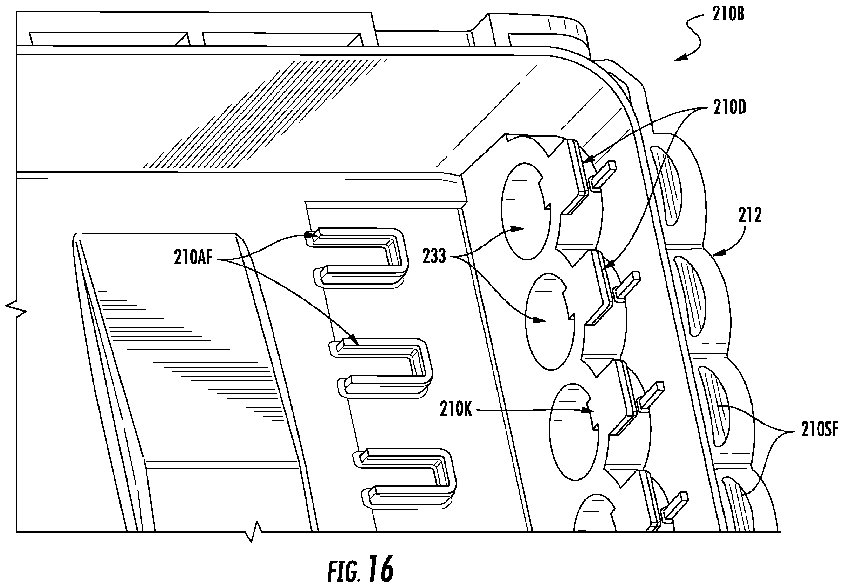

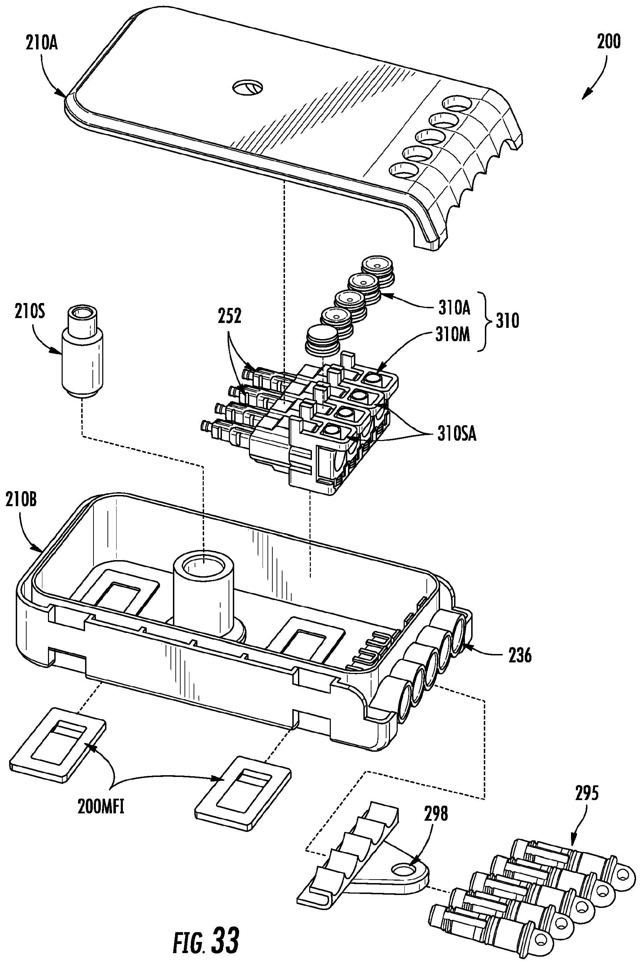

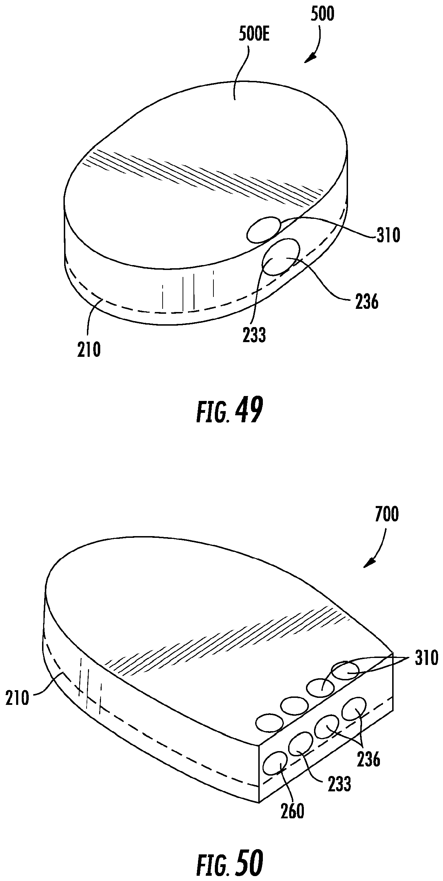

The devices disclosed may locate the plurality of connection ports 236 in different portions or components of the device as desired using the disclosed concepts. The concepts are shown and described with a device 200 having 4- connection ports that are optically connected to an input port arranged in an array on one end of the device, but other configuration are possible such as connection ports or input ports on both ends, an express port, a pass-through port or the like. **FIGS. 3-32** show the construction and features for a first explanatory multiport, and **FIGS. 33-47** show the construction of a second explanatory multiport 200 similar to the first multiport 200. Although, these concepts are described with respect to multiports the concepts may be used with any other suitable devices such as wireless devices **(****FIG. 49****),** closures **(****FIG. 50****)** or other suitable devices.

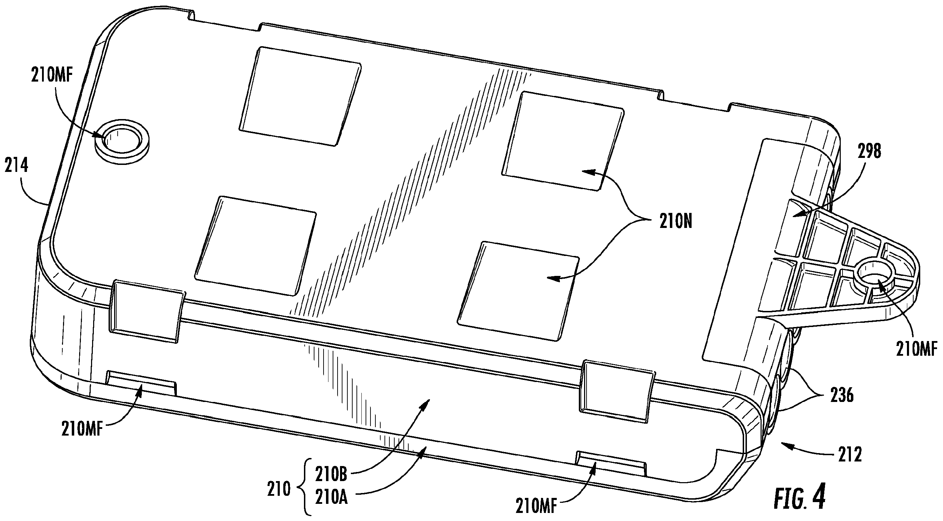

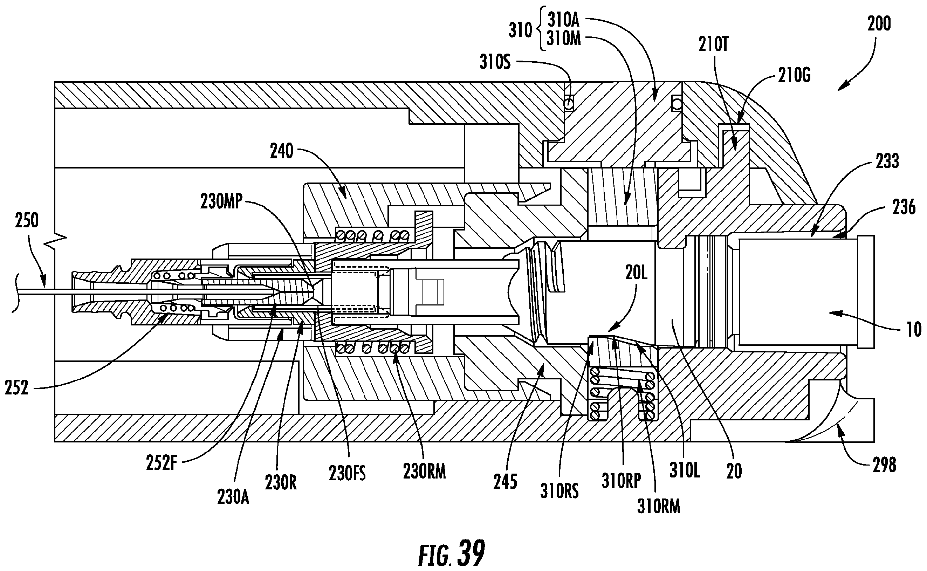

**FIGS. 3** **and** **4** respectively depict top and bottom perspective views of the first explanatory multiport 200 comprising a plurality of connection ports 236. The Generally speaking, devices such as multiport 200 comprise a shell 210 comprising a body 232 and one or more connection ports 236 disposed on a first end or portion 212 of multiport 200. The connection ports 236 or input port 260 are configured for receiving and retaining suitable external fiber optic connectors 10 (**FIG. 39**) for making optical connections with the multiport 200.

Connection ports 236 each comprises a respective optical connector opening 238 extending from an outer surface 234 of the multiport 200 into a cavity 216 of the multiport 200 and defining a portion of a connection port passageway 233. By way of explanation, the plurality of connection ports 236 are molded as a portion of shell 210. A plurality of securing features 310 are present, each securing feature 310 is associated with the connection port passageway 233 for cooperating with the external fiber optic connector 10. The securing feature 310 translates for releasing or securing the external fiber optic connector 10. Multiport 200 of **FIGS. 3** **and** **4** also comprises an input port 260 that is similar to the connection ports 236. As shown, the connection ports 236 or input port 260 may comprise a marking indicia such as an embossed number or text, but other marking indicia are also possible. For instance, the marking indicia may be on the securing feature 310 such as text or the securing features may be color-coded to indicate fiber count, input or output for the associated connection port or input port.

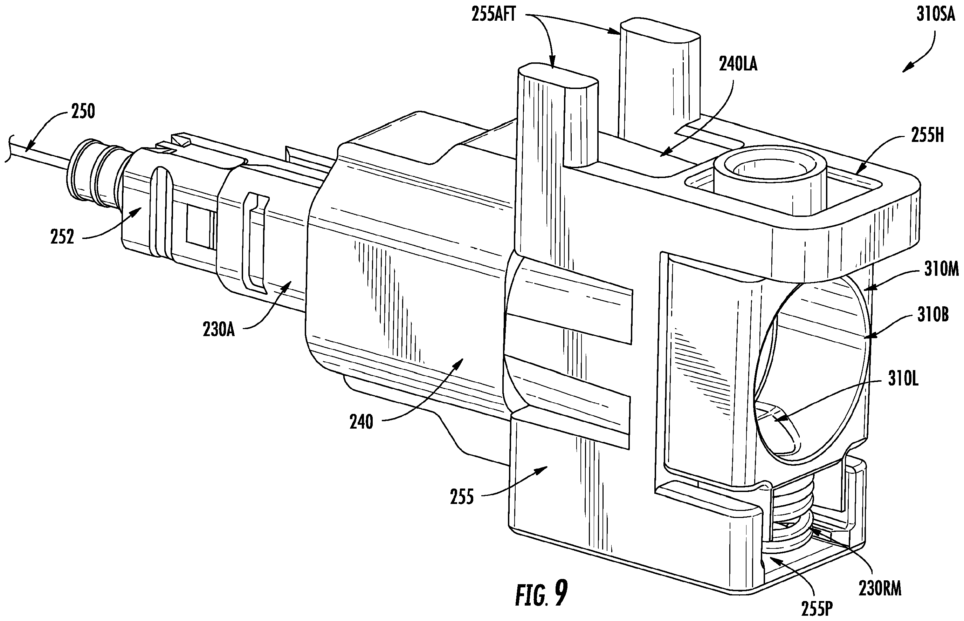

The concepts disclosed use a securing feature resilient member 310RM for biasing a portion of the securing feature 310 as discussed herein. Multiports 200 disclosed use one or more modular adapter sub-assemblies 310SA **(****FIGS. 9-12****)** disposed within a shell for a scalable form-factor for manufacturing similar devices with different port counts. The shell comprises one or more connection ports and device comprises one or more respective securing features 310 cooperating with the connection ports for providing quick and easy optical connectivity with a robust and reliable design that is intuitive to use.

Optical connections to the devices are made by inserting one or more suitable external fiber optic connectors into respective connection port passageways 233 as desired. Specifically, the connection port passageway 233 is configured for receiving a suitable external fiber optic connector (hereinafter connector) of a fiber optic cable assembly (hereinafter cable assembly). Connection port passageway 233 is associated with a securing feature 310 for retaining (e.g., securing) the connector in the multiport 200 for making an optical connection. The securing feature 310 advantageously allows the user to make a quick and easy optical connection at the connection port 236 of multiport 200. The securing feature 310 may also operate for providing a connector release feature when actuated.

Specifically, the connector may be retained within the respective connection port 236 of the device by pushing and fully-seating the connector within the connection port 236. To release the connector from the respective connection port 236, the securing feature 310 is actuated by pushing inward and releasing the securing feature 310 from the locking feature 20L on the external connector housing 20 (**FIG. 39**) and allowing the connector to be removed from the connection port 236. Stated another way, the at least one securing feature 310 is capable of releasing the connector when a portion of the securing feature 310 translates within a portion of a securing feature passageway 245. The full insertion and automatic retention of the connector may advantageously allow one-handed installation of the connector by merely pushing the connector into the connection port 236. The devices disclosed accomplish this connector retention feature upon full-insertion by biasing the securing feature to a retain position. However, other modes of operation for retaining and releasing the connector are possible according to the concepts disclosed. For instance, the securing feature 310 may be designed to require actuation for inserting the connector; however, this may require a two-handed operation.

Securing feature 310 may be designed for holding a minimum pull-out force for the connector. In some embodiments, the pull-out force may be selected to release the connector before damage is done to the device or the connector. By way of example, the securing feature 310 associated with the connection port 236 may require a pull-out force of about 50 pounds (about 220N) before the connector would release. Likewise, the securing feature 310 may provide a side pull-out force for connector for inhibiting damage as well. By way of example, the securing feature 310 associated with the connection port 236 may provide a side pull-out force of about 25 pounds (about 110N) before the connector would release. Of course, other pull-out forces such as 75 pounds (about 330N) or 100 (about 440N) pounds are possible along with other side pull-out forces.

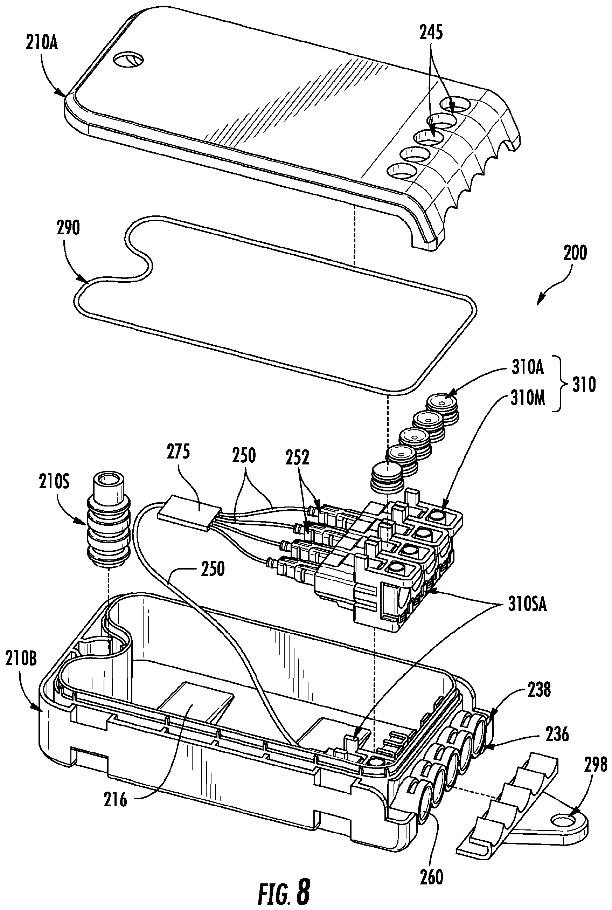

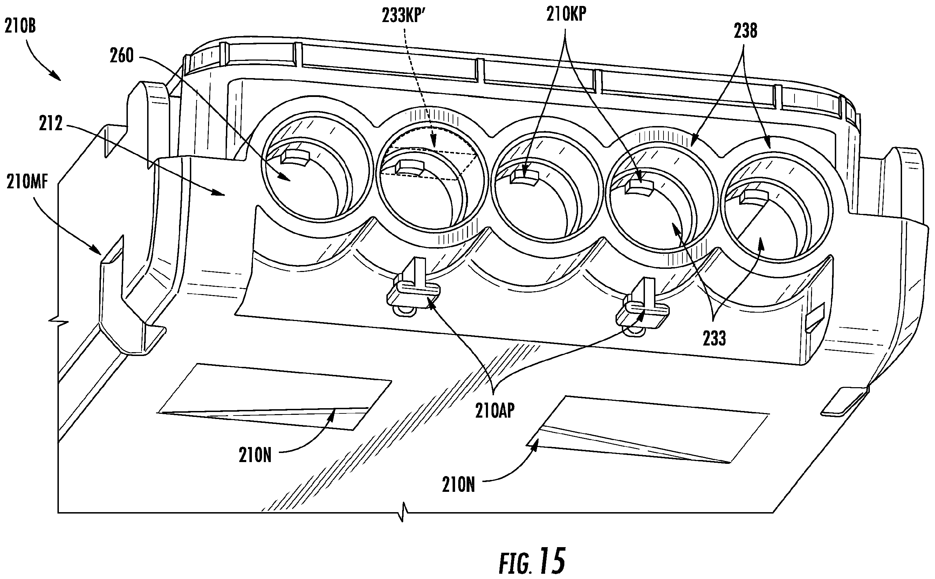

**FIGS. 3** **and** **4** depict that shell 210 is formed by a first portion 210A and a second portion 210B, but other constructions are possible for shell 210 using the concept disclosed. Multiport 200 or devices may comprise mounting features that are integrally formed in the shell 210 or that are separate components attached to shell 210 for mounting the device as depicted in **FIGS. 3** **and** **4**. By way of example, shell 210 depicts mounting features 210MF disposed near first and second ends 212, 214 of shell 210. Mounting feature 210MF adjacent the first end 212 of multiport 200 is a mounting tab 298 attached to shell 210, and the mounting feature 210MF adjacent the second end 214 is a through hole with a support 210S. Details of mounting tab will be discuss in further detail with respect to **FIGS. 15** and, and details of support 210S will be discussed in further detail with respect to **FIG. 8**. However, mounting features 210MF may be disposed at any suitable location on the shell 210 or connection port insert 230. For instance, multiport 200 also depicts a plurality of mounting features 210MF integrally-formed on shell 210 and configured as passageways disposed on the lateral sides. Thus, the user may simply use a fastener such as a zip-tie threaded thru these lateral passageways for mounting the multiport 200 to a wall or pole as desired. Shell 210 may also include one or more notches **210N** on the bottom side for aiding in securing the device to a round pole or the like as shown in **FIG. 4****.**

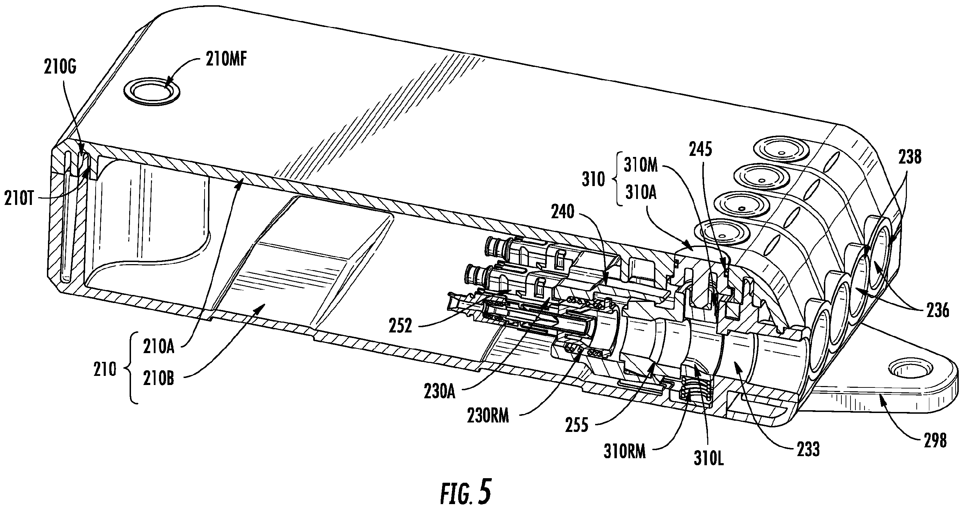

**FIGS. 5-7** depict various cross-sections through a connection port passageway 233 showing the internal construction of multiport 200, and **FIG. 8** is a partially exploded view of multiport 200 showing the optical fibers 250 that optically connect the connection ports 236 with the input port 260 inside the device. As depicted in **FIG. 8**, multiport 200 comprises a shell 210 comprising a plurality of connection ports 236, and a plurality of modular adapter sub-assemblies 310SA as discussed in further detail herein.

**FIGS. 5-7** depicts the multiport 200 comprising the plurality of connection ports 236 extending from an outer surface 234 of the multiport 200 into a cavity 216 of the multiport 200 and defining a connection port passageway 233. Multiport 200 also comprises a plurality of securing features 310, each securing feature 310 associated with the respective connection port passageway 233. Multiport 200 also comprises one a plurality of securing feature passageways 245 for receiving a portion of the securing feature 310. As depicted, the securing feature passageways 245 extend from the outer surface 234 of multiport 200 to cooperate with the respective connection port passageways 233 of the multiport 200. Multiport 200 also comprises a plurality of adapters 230A for receiving respective rear connectors 252 in alignment with the respective connection port 236 for making the optical connection with the external fiber optic connector.

The securing features 310 disclosed herein may take many different constructions or configurations as desired such as being formed as a single component or a plurality of components. Securing features 310 may be biased by a resilient member 230 RM. Furthermore, the securing features 310 or portions of securing features 310 may be constructed as a portion of a modular adapter sub-assemblies 310SA such as shown in **FIGS. 9-12** for easy assembly of the multiport 200. Moreover, the modular sub-assemblies 230SA advantageously allow the mating components for each connection port 236 to move or "float" independently of other mating components relative to the shell 210 for the other connection ports for preserving optical performance. "Float" means that the adapter 230A can have slight movement in the X-Y plane for alignment, and may be inhibited from overtraveling in the Z-direction along the axis of connector insertion so that suitable alignment may be made between mating connectors, which may include a biasing spring for allowing some displacement of the adapter 230A with a suitable restoring force provided by the spring.

Generally speaking, the devices disclosed comprise a plurality of connection ports 236 defined by an optical connector opening 238 extending into a cavity 216 of the device 200, 500, 700 along with a securing feature 310 associated with the connection port 236.

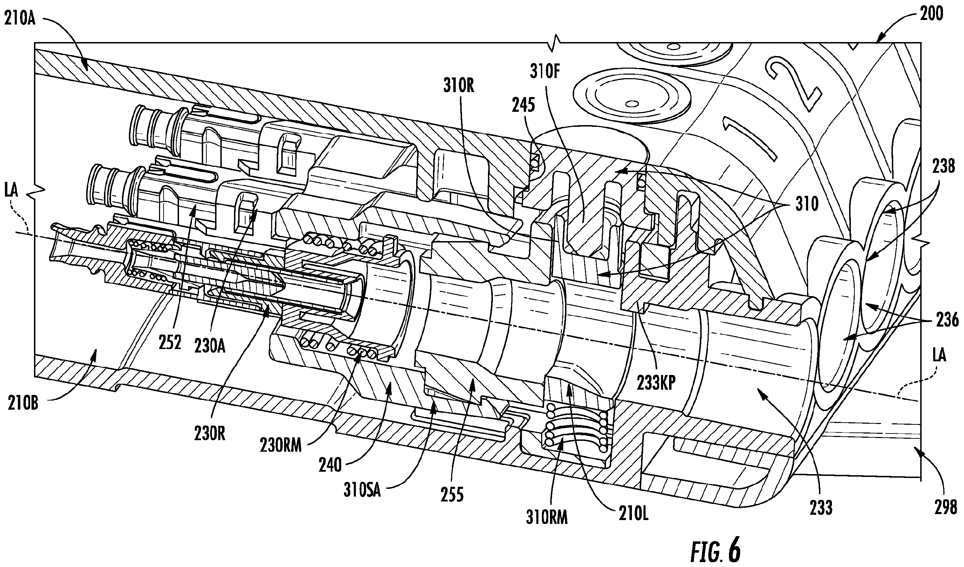

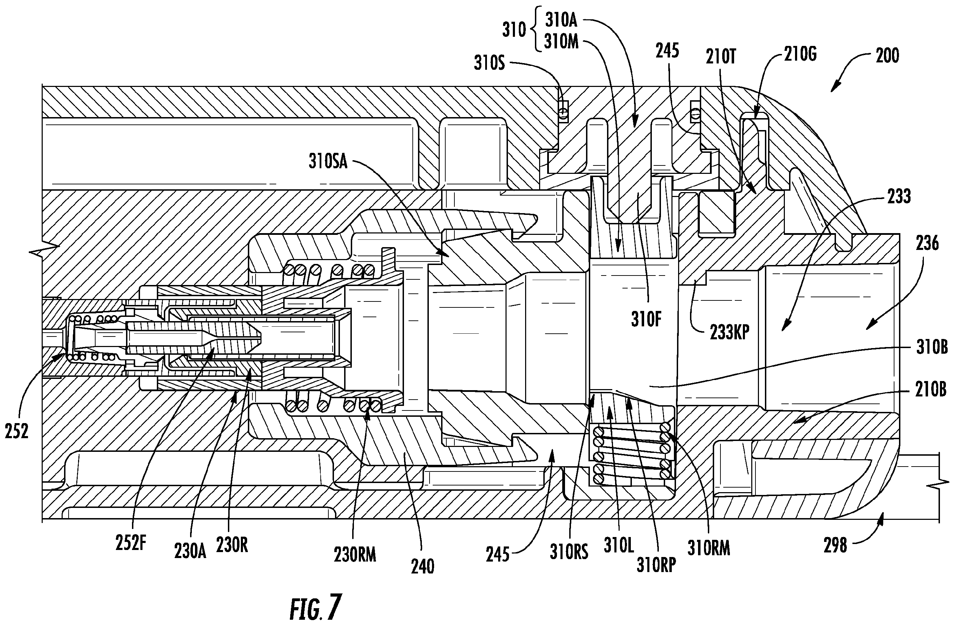

As best shown in **FIGS. 6** **and** **7****,** securing feature 310 is biased to a retain position. Specifically, the securing feature 310 is biased in an upward direction using a securing feature resilient member 310RM. More specifically, securing feature resilient member 310RM is disposed beneath securing feature 310 for biasing to a normally retain position for the securing feature 310 where the locking feature 310L is disposed in the connection port passageway 233.

As best depicted in **FIGS. 6** **and** **7****,** a portion of actuator 310A is disposed within a portion of the securing feature passageway 245 and cooperates with the securing member 310M of the respective securing feature. Consequently, a portion of securing feature 310 (i.e., the actuator 310A) is capable of translating within a portion of the securing feature passageway 245. Actuator 310A comprises a finger 310F for seating within a rim 310R of securing member 310M for transferring forces to the same. As depicted, a sealing feature 310S is disposed on the securing feature 310. Sealing feature 310S provides a seal between a portion of the securing feature 310 and the securing feature passageway 245 to inhibit dirt, dust and debris from entering the device. As shown, the sealing feature 310S is disposed within a groove of actuator 310A.

In this embodiment, the securing feature 310 comprises a bore 310B that is aligned with the least one connection port passageway 233 when assembled as best shown in **FIG. 7**. Bore 310B is sized for receiving a suitable connector therethrough for securing the same for optical connectivity. Bores or openings through the securing feature 310 may have any suitable shape or geometry for cooperating with its respective connector. As used herein, the bore may have any suitable shape desired including features on the surface of the bore for engaging with a connector. Bore 310B is disposed on the securing member 310M in this embodiment.

In some embodiments, a portion of the securing feature 310 is capable of moving to an open position when inserting a suitable connector 10 into the connection port passageway 233. When the connector 10 is fully-inserted into the connector port passageway 233, the securing feature 310 such as the securing member 310M is capable of moving to the retain position automatically. Consequently, the connector 10 is secured within the connection port 236 by securing feature 310 without turning a coupling nut or a bayonet like the prior art multiports. Stated another way, the securing feature 310 translates from the retain position to an open position as a suitable connector 10 is inserted into the connection port 236. The securing feature passageway 245 is arranged transversely to a longitudinal axis LA of the multiport 200, but other arrangements are possible. Other securing features may operate in a similar manner, but use an opening instead of a bore that receives the connector therethrough.

**FIGS. 6** **and** **7** depict securing feature 310 comprising a locking feature 310L. Locking feature 310L cooperates with a portion of the connector 10 when it is fully-inserted into the connection port 236 for securing the same. As best shown in FIG. 39, the connector housing 20 of connector 10 may have a cooperating geometry that engages the locking feature 310L of securing feature 310. In this embodiment, locking feature 310L comprises a ramp 310RP. The ramp is integrally formed at a portion of the bore 310B with the ramp angling up when looking into the connection port 236. The ramp allows the connector to push and translate the securing feature 310 downward against the securing feature resilient member 310RM as the connector is inserted in the connection port 236 as shown. Ramp may have any suitable geometry. Once the locking feature 310L of the securing feature 310 is aligned with the cooperating geometry of the locking feature 20L of connector, then a portion of the securing feature 310 translates so that the locking feature 310L engages the locking feature of connector.

Locking feature 310L comprises a retention surface 310RS. In this embodiment, the back-side of the ramp of locking feature 310L forms a ledge that cooperates with complimentary geometry on the connector housing of connector. However, retention surface 310RS may have different surfaces or edges that cooperate for securing connector for creating the desired mechanical retention. For instance, the retention surface 310RS may be canted or have a vertical wall for tailoring the pull-out force for the connection port 236. However, other geometries are possible for the retention surface 310RS. Additionally, the connection port 236 has a sealing location at a connection port passageway sealing surface with the connector that is located closer to the optical connector opening 238 at the outer surface 234 than the securing feature 310 or locking feature 310L. In other words, connection port 236 has connection port passageway sealing surface for the connector disposed at a distance from the optical connector opening 238 and the locking feature 310L and securing feature 310 are disposed at a distance further into the connection port passageway 233 than distance where the connector sealing occurs.

Generally speaking, the connection port passageways 233 may be configured for the specific connector intended to be received in the connection port 236. Likewise, the connection port passageways 233 should be configured for receiving the specific rear connector 252 for mating and making an optical connection with the connector 10.

The device 200 also comprises a plurality of adapters 230A aligned with the respective connection port 236 or connection port passageway 233. Adapter 230A and other components are a portion of the modular sub-assembly 310SA as depicted in **FIGS. 9-12**. Adapter 230A is suitable for securing a rear connector 252 thereto for aligning the rear connector 252 with the connection port 236. One or more optical fibers 250 (**FIG. 8**) may be routed from the connection port 236 toward an input connection port 260 of the multiport 200. For instance, the rear connector 252 may terminate the optical fiber 250 for optical connection at connection port 236 and route the optical fiber 250 for optical communication with the input connection port 260.

A plurality of rear connectors 252 are aligned with the respective connector port passageways 233 within the cavity 216 of the multiport 200. The rear connectors 252 are associated with one or more of the plurality of optical fibers 250. Each of the respective rear connectors 252 aligns and attaches to a structure such as the adapter 230A or other structure related to the connection port passageway 233 in a suitable matter. The plurality of rear connectors 252 may comprise a suitable rear connector ferrule 252F as desired and rear connectors 252 may take any suitable form from a simple ferrule that attaches to a standard connector type inserted into an adapter. By way of example, rear connectors 252 may comprise a resilient member for biasing the rear connector ferrule 252F or not. Additionally, rear connectors 252 may further comprise a keying feature.

The rear connectors 252 shown in **FIGS. 5-7** have a SC footprint, but other connectors are possible. If SC connectors are used as the rear connector 252 they have a keying feature 252K that cooperates with the keying feature of adapter 230A. Additionally, adapters 230A comprise a retention feature (not numbered) for seating the adapters 230A in the device adjacent to the connection port passageway 233.

As best shown in **FIGS. 7** **and** **15****,** the connection port passageway 233 may comprises a keying portion 233KP disposed forward of the securing feature 310 in connection port passageway. As shown, the keying portion 233KP is an additive keying portion to the primitive geometric round shape of the connection port passageway 233 such as a male key that is disposed forward of the securing feature in the connection port passageway 233. However, the concepts for the connection ports 236 of devices may be modified for different connector designs.

Adapters 230A are secured to an adapter body 255 using retainer 240. Adapters 230A may be biased using a resilient member 230RM as shown. Rear connectors 252 may take any suitable form and be aligned for mating with the connector secured with the connection ports 236 in any suitable manner. Adapters 230A may comprise latch arms for securing respective rear connectors therein.

Multiport 200 may have the input connection port 260 disposed in any suitable location. As used herein, "input connection port" is the location where external optical fibers are received or enter the device, and the input connection port does not require the ability to make an optical connection as discussed below. By way of explanation, multiport 200 may have the input connection port 260 disposed in an outboard position of the array of connection ports 236, on another side of the multiport, or disposed in a medial portion of array of connection ports 236 as desired.

**FIG. 8** shows a partially exploded view of multiport 200 of **FIGS. 3** **and** **4****.** Multiport 200 comprises a shell 200, a plurality of connection ports 236, and a plurality of modular adapter sub-assemblies 310SA. Multiport 200 has one or more optical fibers 250 routed from the one or more connection ports 236 toward an input connection port 260 in a suitable fashion inside cavity 216 as depicted. In this embodiment, the rear connectors 252 are attached to optical fibers 250 that are routing through an optical splitter 275 (hereinafter "splitter(s)") for optical communication with the optical fiber 250 in optical communication with the input port 260. As shown, the modular adapter sub-assembly 310SA for the input connection port 260 is disposed in second portion 210B of shell 210.

Optical fibers 250 are routed from one or more of the plurality of connection ports 236 toward an input connection port 260 for optical communication within the multiport 200. Consequently, the input connection port 260 receives one or more optical fibers and then routes the optical signals as desired such as passing the signal through 1:1 distribution, routing through an optical splitter or passing optical fibers through the multiport. Splitters 275 such as shown in **FIG. 8** allow a single optical signal to be split into multiple signals such as 1×N split, but other splitter arrangements are possible such as a 2xN split. For instance, a single optical fiber may feed input connection port 260 and use a 1x8 splitter within the multiport 200 to allow eight connector ports 236 for outputs on the multiport 200. The input connection port 260 may be configured in a suitable manner with any of the multiports 200 disclosed herein as appropriate such as a single-fiber or multi-fiber port. Likewise, the connection ports 236 may be configured as a single-fiber port or multi-fiber port. For the sake of simplicity and clarity in the drawings, all of the optical fiber pathways may not be illustrated or portions of the optical fiber pathways may be removed in places so that other details of the design are visible.

Additionally, the multiports or shells 210 may comprise at least one support 210S or fiber guide for providing crush support for the multiport and resulting in a robust structure. As depicted in **FIG. 8**, multiport 200 may comprise a support 210S configured as a support insert that fits into shell 210. Support 210S has a bore therethrough and may act as a mounting feature for the use to a fastener to mount the multiport 200. Consequently, the support 210S carries the majority of any crushing forces that may be applied by the fastener and inhibits damage to the shell 210. Support 210S may also be located and attached to the shell at a location outside of the sealing interface between the first portion 210A and the second portion 210B of shell 210.

**FIG. 7** also depicts a detailed sectional view of the interlocking features between the first portion 210A and the second portion 210B of the shell 210. Specifically, portions of the multiport may have a tongue 210T and groove 210G construction for alignment or sealing of the device.

Any of the multiports 200 disclosed herein may optionally be weatherproof by appropriately sealing seams of the shell 210 using any suitable means such as gaskets, O-rings, adhesive, sealant, welding, overmolding or the like. To this end, multiport 200 or devices may also comprise a sealing element 290 disposed between the first portion 210A and the second portion 210B of the shell 210. The sealing element 290 may cooperate with shell 210 geometry such as respective grooves 210G or tongues 210T in the shell 210. Grooves or tongue may extend about the perimeter of the shell 210. By way of explanation, grooves 210G may receive one or more appropriately sized O-rings or gaskets 290A for weatherproofing multiport 200, but an adhesive or other material may be used in the groove 210G. By way of example, the O-rings are suitably sized for creating a seal between the portions of the shell 210. By way of example, suitable O-rings may be a compression O-ring for maintaining a weatherproof seal. Other embodiments may use an adhesive or suitable welding of the materials for sealing the device. If welding such as ultra-sonic or induction welding of the shell is used a special sealing element 290 may be used as known in the art. If the multiport 200 is intended for indoor applications, then the weatherproofing may not be required.

As shown in **FIG. 8**, multiport 200 comprises a single input optical fiber of the input connection port 260 is routed to a 1:4 splitter 275 and then each one of the individual optical fibers 250 from the splitter is routed to each of the respective rear connector 252 of the four connection ports 236 for optical connection and communication within the multiport. Input connection port 260 may be configured in any suitable configuration for the multiports disclosed as desired for the given application. Examples of input connection ports 260 include being configured as a single-fiber input connection, a multi-fiber input connector, a tether input that may be a stubbed cable or terminated with a connector or even one of the connection ports 236 may function as an pass-through connection port as desired.

By way of explanation for multi-fiber ports, two or more optical fibers 250 may be routed from one or more of the plurality of connection ports 236 of the multiport 200 disclosed herein. For instance, two optical fibers may be routed from each of the four connection ports 236 of multiport 200 toward the input connection port 260 with or without a splitter such as single-fiber input connection port 260 using a 1:8 splitter or by using an eight-fiber connection at the input connection port 260 for a 1:1 fiber distribution. To make identification of the connection ports or input connection port(s) easier for the user, a marking indicia may be used such as text or color-coding of the multiport, color codes on the actuator 310A, or marking the input tether (e.g. an orange or green polymer) or the like.

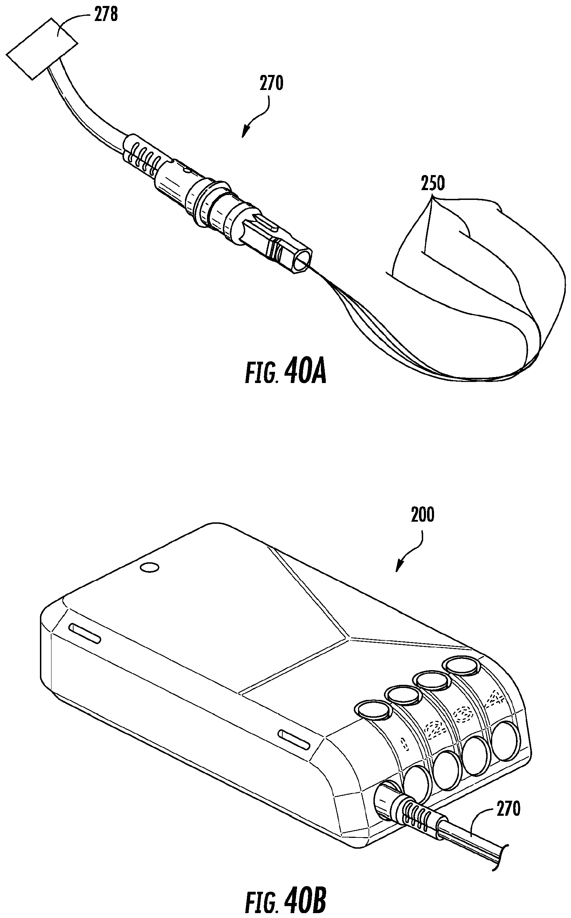

Other configurations are possible besides an input connection port 260 that receives a connector 10. Instead of using a input connection port that receives a connector 10, multiports 200 may be configured for receiving an input tether 270 attached to the multiport at the input connection port 260 such as represented in **FIG. 40A and 40B****.**

**FIGS. 9-12** show modular adapter sub-assembly 310SA used in the multiport of **FIGS. 3** **and** **4**. Modular adapter sub-assemblies 310SA enable quick and easy assembly of multiports 200 in a scalable manner. Moreover, the modular sub-assemblies 230SA advantageously allow the mating components (i.e., the adapters 230A) corresponding to each connection port 236 to move or "float" independently of other the other modular adapter sub-assemblies 310SA relative to the shell 210 for preserving optical performance.

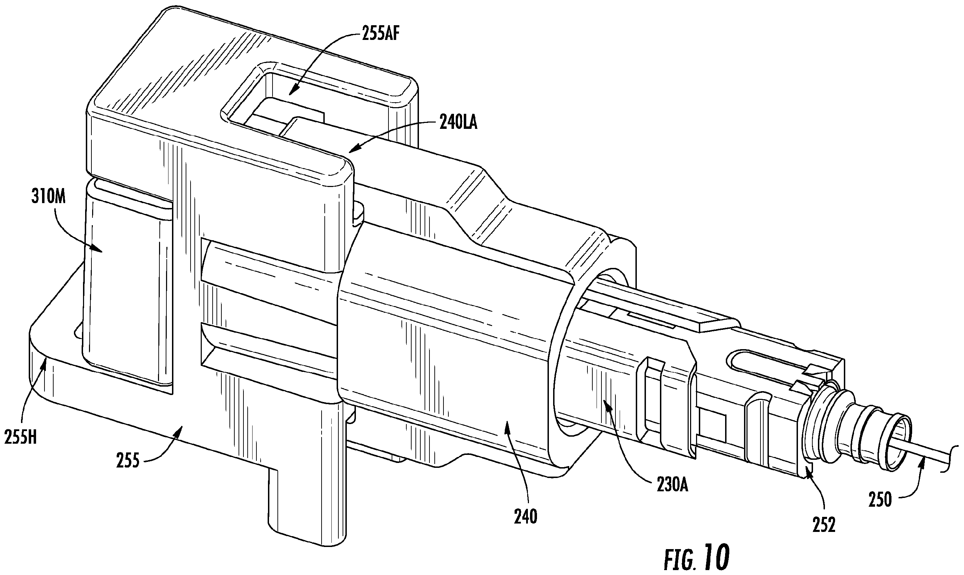

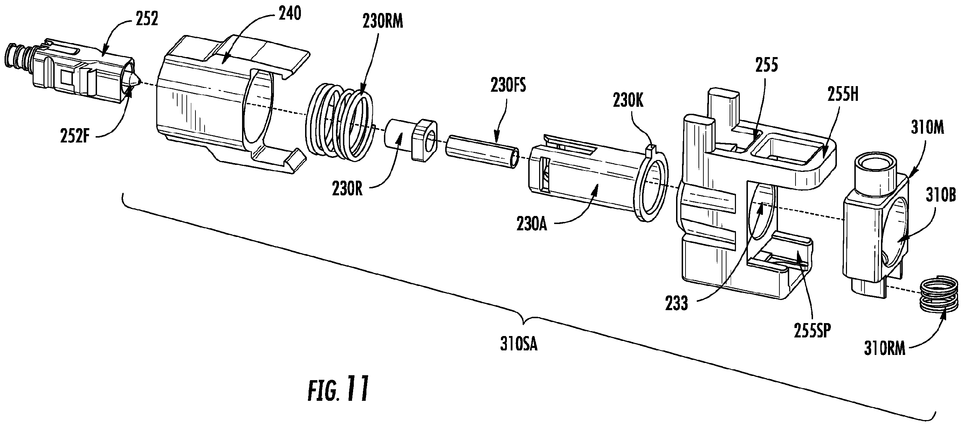

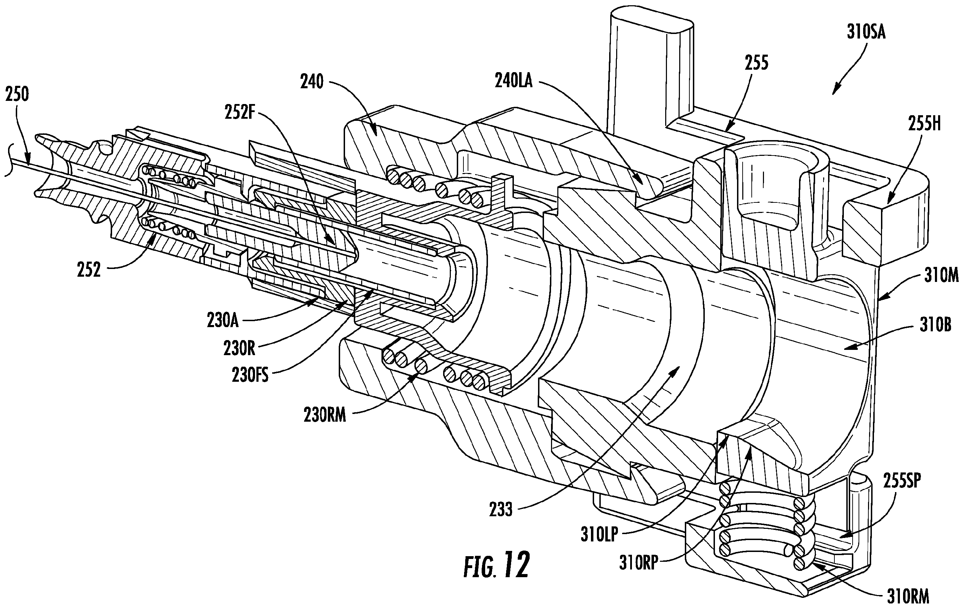

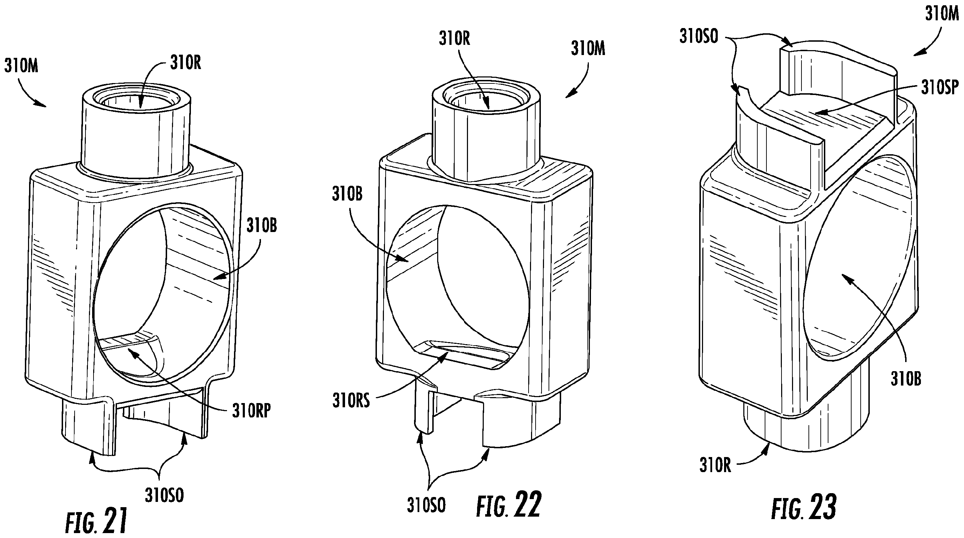

**FIGS. 9** **and** **10** respectively show front and rear perspective views of modular adapter sub-assemblies 310SA with a rear connector 252 attached to the adapter 230A. **FIG. 11** depicts an exploded view of the modular adapter sub-assemblies 310SA and shows that the rear connector 252 is not a portion of modular adapter sub-assembly 310SA, and **FIG. 12** is a cross-sectional view of the modular adapter sub-assembly 310SA. Modular adapter sub-assemblies 310SA comprises an adapter 230A aligned with the at least one connection port 236 when assembled. Adapter 230 may be biased by a resilient member 230RM. The adapter (230A) may be secured to the adapter body 255 using retainer 240. **FIGS. 21-32** show details of select components of the modular adapter sub-assembly 310SA.

As best shown in **FIG. 11**, modular adapter sub-assembly 310SA comprises a portion of securing feature 310 and a securing feature resilient member 310RM. Specifically, modular adapter sub-assembly 310SA comprises securing member 310M. However, other embodiments could comprise an actuator 310A or have a single securing feature 310 as part of the assembly. Securing member 310M is inserted into a front end of an adapter body 255 along with securing feature resilient member 310RM. Specifically, the rim 310R of securing member 310M is inserted into a hoop 255H of adapter body 255 and standoffs 310SO are disposed in a portion of the resilient member pocket 255SP at the bottom of the adapter body 255. Securing feature resilient member 310RM is disposed in the resilient member pocket 255SP for biasing the securing member 310M to a retain position as shown in **FIG. 12**. This construction advantageously keeps the assembly intact using the securing feature resilient member 310RM. Standoffs 310SO of adapter body 255 may also act as stops to limit the translation of the securing member 310.

In this embodiment, modular adapter sub-assembly 310SA may comprises an adapter body 255, securing member 310M, securing feature resilient member 310RM, a ferrule sleeve 230FS, a ferrule sleeve retainer 230R, resilient member 230RM, a retainer along with the adapter 230A. Adapter body 255 has a portion of the connection port passageway 233 disposed therein.

As best depicted in **FIGS. 11** **and** **12****,** the is resilient member 230RM is disposed over a barrel of adapter 230A and seated on the flange of adapter 230A as depicted, then retainer 240 can be attached to adapter body 255 using latch arms 240LA to secure the same. Ferrule sleeve retainer 230R and ferrule sleeve 230FS are aligned for assembly into the adapter 230A for assembly as shown in **FIG. 11** and seated using the ferrule sleeve retainer 230R. Of course, other variations of the modular adapter sub-assembly 310SA are possible.

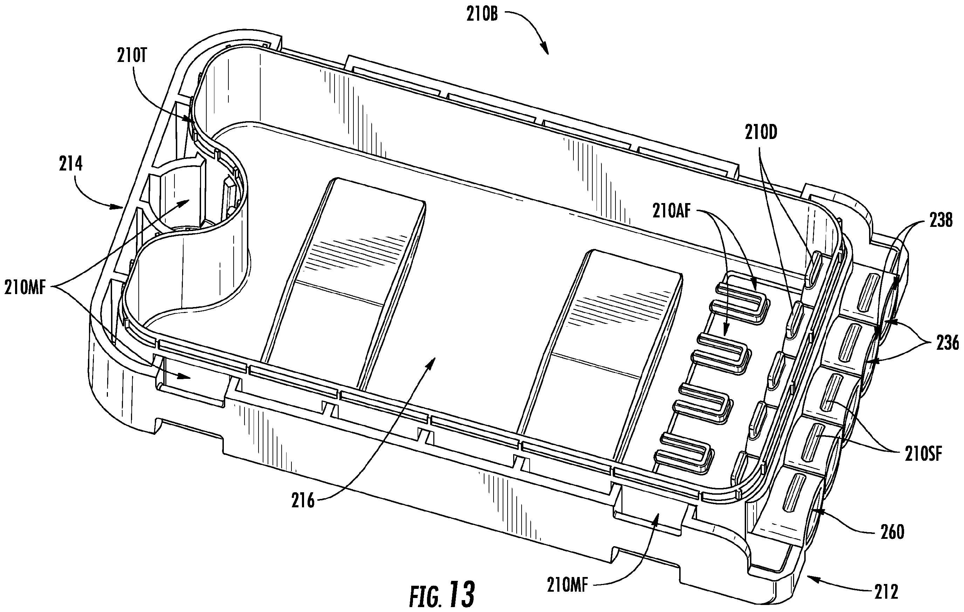

**FIGS. 13-16** depict detailed views of the second portion 210B of shell 210 with the internal components removed for showing the internal construction of the multiport 200 of **FIGS. 3** **and** **4** . Shells 210 may have any suitable shape, design or configuration as desired. Second portion 210B cooperates with first portion 210A to form shell 210. Second portion 210B comprises a plurality of connection ports 236 and input connection port 260. Second portion 210B provides a portion of cavity 216 of multiport 200, and the internal bottom surface of second portion 210B comprises a plurality of alignment features 210AF for aligning the modular adapter sub-assembly 310SA with the respective connection ports 236. Alignment features 210AF have a U-shape and cooperate with the alignment features 255AF on the bottom of adapter body 255. Second portion 210B also includes a plurality of studs 210D on top of the respective connection ports 236 within cavity 216 for seating the hoop 255H of the adapter body 255 for assembly. Second portion 210B may also include a plurality of guide features 210SF for aligning the first portion 210A with the second portion 210B of the shell 210.

**FIG. 15** is a front perspective view of second portion 210B showing other features. As shown, the keying portion 233KP is an additive keying portion to the primitive geometric round shape of the connection port passageway 233 such as a male key that is disposed forward of the securing feature in the connection port passageway 233. However, the concepts for the connection ports 236 of devices may be modified for different connector designs. For instance, the keying portion 233KP may be defined as a walled-portion across part of the connection port passageway 233 as represented by the dashed line 233KP' shown in one of the connection ports 236. Thus, the connection port with keying portion 233KP' would be able to properly receive an external fiber optic connector having a portion with a proper D-shaped portion.

**FIG. 15** also depicts alignment protrusions 210AP on the front end 212 of second portion 210B of shell 210. Alignment protrusions 210AP cooperate with mounting tab 298 for aligning and attaching the same to the shell 210 of the multiport 200. In other embodiments, the mounting tab could be integrally formed with the shell 210, but that requires a more complex molding process.

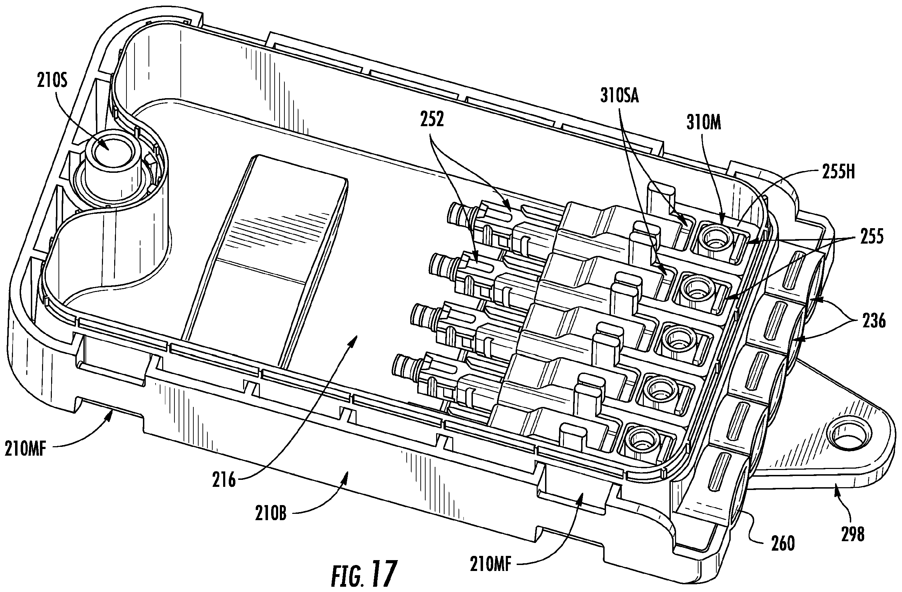

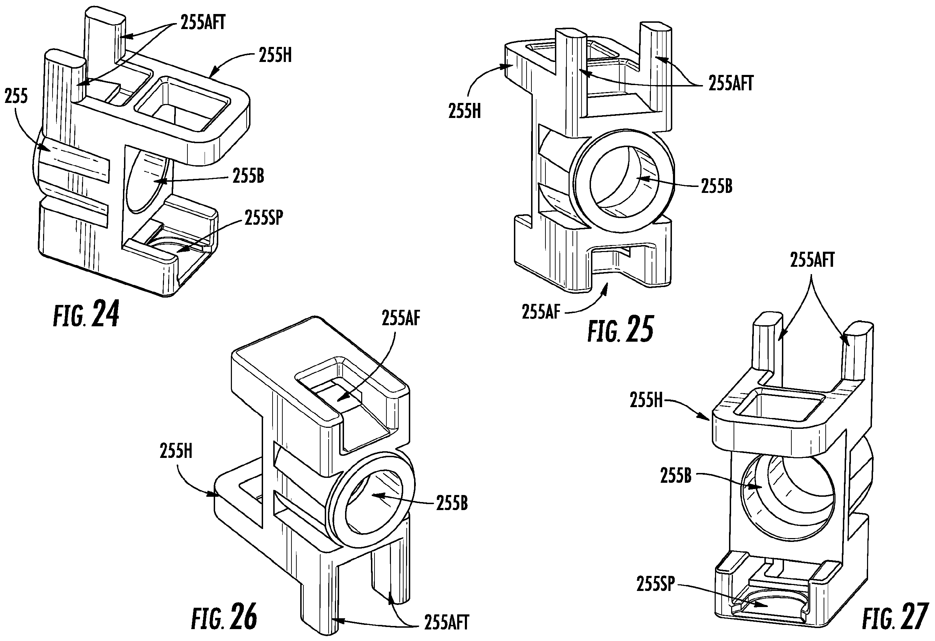

**FIG. 17** depicts the assembly of modular sub-assemblies 310SA into the second portion 210B of shell 200. As shown, modular adapter sub-assemblies 310AS are aligned and installed onto the U-shaped alignment features 210AF of the second portion 210B of shell 210 as discussed. **FIG. 26** shows a representation of the alignment features 210AF of the second portion 210B of shell 210 cooperating with the alignment features 255AF on the bottom of adapter body 255 in another embodiment. **FIG. 17** also shows the hoops 255H of the adapter bodies 255 disposed about the plurality of studs 210D on top of the respective connection ports 236 within cavity 216 for aligning the modular adapter sub-assembly 310SA within the second portion 210B of shell 210 for aligning the connection port passageway 233 of the adapter body 255 with the connection port passageway 233 of the shell 210. **FIG. 17** also shows the support 210S placed into the respective bore of the second portion 210B of the shell. As depicted, support 210S is located outside of the sealing interface of the second portion 210B of shell 210.

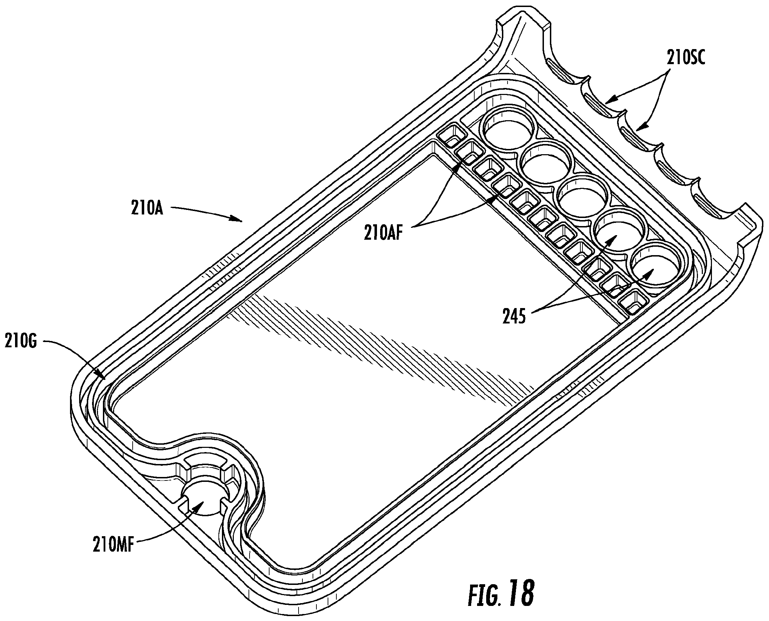

**FIG. 18** depicts an inside surface of the first portion 210A of shell 200. As shown, first portion 210A comprises a profile that conforms to the profile of the second portion 210B of shell 210. By way of explanation, first portion 210A comprises a plurality of scallops 210SC for cooperating with the connection ports 236 on the second portion 210B of shell 210. First portion 210A also comprise a sealing perimeter that cooperates with the sealing perimeter of the second portion 210B of shell 210. First portion 210A also comprises alignment features 210AF sized and shaped for cooperating with the alignment features 255AFT on the top of adapter body 255 for securing the same when the multiport is assembled. The respective alignment features 210AF,255AF only allow assembly of the modular adapter sub-assemblies 310AS into the shell 210 in one orientation for the correct orientation of the locking feature 310L with respect to the connection port 236.

Multiport may include a fiber tray or fiber guide/supports that are discrete components that may attach to the shell 210; however, fiber guides may be integrated with the shell if desired. Shell may also 210 comprise one or more fiber guides for organizing and routing optical fibers 250. The fiber tray inhibits damage to optical fibers and may also provide a location for the mounting of other components such as splitters, electronics or the like if desired. Fiber guides may also act as support 210S for providing crush strength to the shell 210 if they have a suitable length.

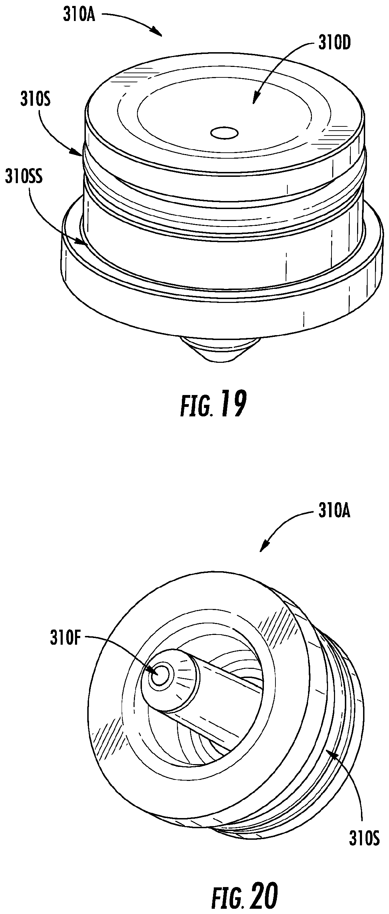

**FIGS. 19 and 20** show detailed perspective view of actuator 310A. Actuator 310A may include a sealing member 310S for keeping dirt, debris and the like out of portions of the multiport 200. Sealing member 310S is sized for the retention groove 310RG in the securing feature 310 and the securing feature passageway 245 for sealing. Actuator 310A may also comprise a stop surface 310SS for inhibiting overtravel of the securing feature 310 of inhibit the actuator from being removed from the multiport 200 when assembled. In this embodiment, the stop surface 310SS. Actuator 310A may also include a dimple 310D or other feature for inhibiting inadvertent activation/translation of the securing feature 310 or allowing a tactical feel for the user. Actuator 310A comprises a finger 310F for seating within a rim 310R of securing member 310M for transferring forces to the same.

Actuator 310A may also be a different color or have a marking indicia for identifying the port type. For instance, the actuator 310A may be colored red for connection ports 236 and the actuator 310A for the input connection port 260 may be colored black. Other color or marking indicia schemes may be used for pass-through ports, multi-fiber ports or ports for split signals.

**FIGS. 21-32** show details of select components of the modular adapter sub-assembly 310SA. **FIGS. 21-23** show various perspective detailed views of securing member 310M. Securing member 310M comprises a locking feature 310L. Locking feature 310L is configured for engaging with a suitable locking portion 20L on the housing 20 of connector 10. In this embodiment, securing feature 310 comprise a bore 310B that is respectively aligned with the respective connector port passageway 233 as shown in **FIG. 8** when assembled. The bore 310B is sized for receiving a portion of connector 10 therethrough as shown in **FIG. 39****.**

As depicted in this embodiment, locking feature 310L is disposed within bore 310B of securing member 310M. As shown, locking feature 310L is configured as ramp 310RP that runs to a short flat portion, then to a ledge for creating the retention surface 310RS for engaging and retaining the connector 10 once it is fully-inserted into the connector port passageway 233 of the connection port 236. Consequently, the securing feature 310 is capable of moving to an open position (OP) when inserting a suitable connector 10 into the connector port passageway 233 since the connector housing 20 engages the ramp 310RP pushing the securing feature downward during insertion.

Securing member 310M may also comprises standoffs 310 as best shown in **FIG.** 23. Standoffs 310 cooperate with the resilient member pocket 255SP of the adapter body 255 for keeping the bore 310B in the proper rotational orientation within the respective to the adapter body 255. Specifically, standoffs 310 have curved shapes that only allow the securing member 310M to fully-seat into the adapter body 255 when oriented in the proper orientation.

**FIG. 24-27** are various perspective views showing the details of the adapter body 255 of the modular adapter sub-assembly 310SA. Adapter body 255 comprises an adapter body bore 255B that comprises a portion of the connection port passageway 233 when assembled. As discussed, adapter body 255 comprises alignment features 255AF on the bottom of adapter body 255 that cooperate with the shell 210 to align and seat the same in the shell 210. Adapter body 255 also comprises hoop 255H. Hoop 255H captures the ring 255R at the top of the securing member 310M when assembled, and also seats the adapter body 255 in the second portion 210B of shell 210 during assembly. Adapter body 255 also comprises alignment features 255AFT on the top of adapter body 255 for securing the same in the first portion 210A of the shell 210 when the multiport 200 is assembled. Adapter body 255 also comprise resilient member pocket 255SP at the bottom of the adapter body 255 for capturing the securing feature resilient member 310RM as depicted in **FIG. 12**.

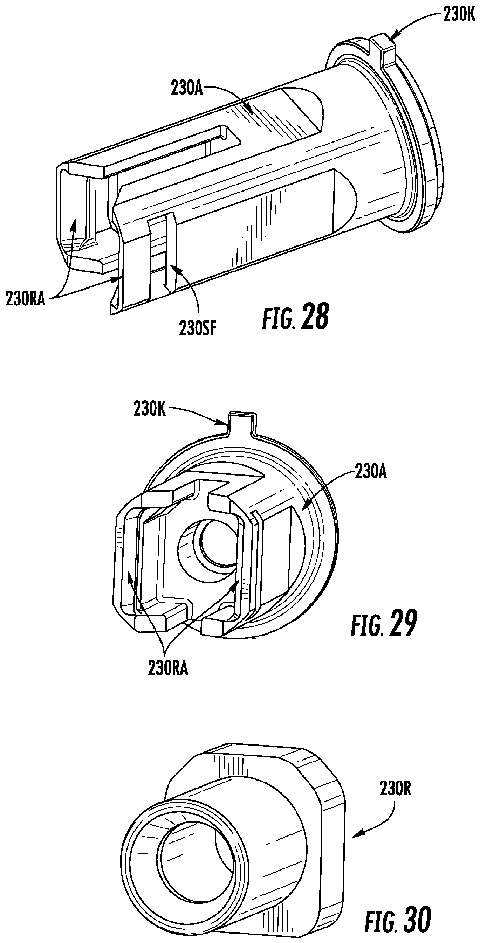

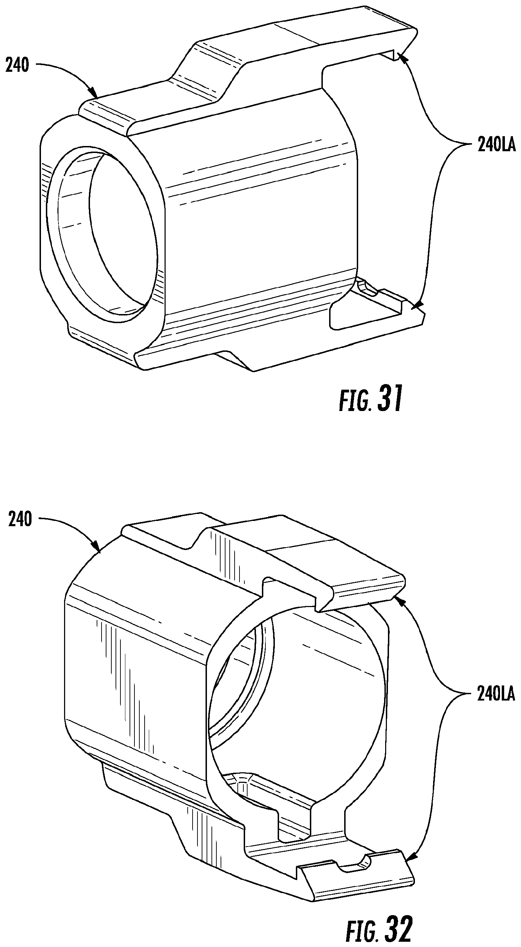

**FIGS. 28 and 29** depict detailed views of adapter 230A. Adapter 230A comprises a plurality of resilient arms 230RA comprising securing features (not numbered). Adapter 230A also comprises an adapter key 230K for orientating the adapter 230A with the adapter body 255. Securing features 230SF cooperate with protrusions on the housing of rear connector 252 for retaining the rear connector 252 to the adapter 230A. The ferrule 252F is disposed within the ferrule sleeve 230FS when assembled. **FIG. 12** is a sectional view showing the attachment of the rear connector 252 with the adapter 230A with ferrule sleeve retainer 230R and the ferrule sleeve 230FS therebetween. Ferrule sleeves 230FS are used for precision alignment of mating ferrules between rear connectors 252 and connector 10. Devices may use alternative rear connectors if desired and can have different structures for supporting different rear connectors. **FIG. 30** depicts details of the ferrule sleeve retainer 230R. **FIGS. 31 and 32** show detailed views of retainer 240 that forms a portion of the modular sub-assembly 310SA. Retainer 240 comprises one or more latch arms 240LA for cooperating with the adapter body 255 for securing the adapter 230A and resilient member 230RM of the modular adapter sub-assembly 310SA.

The concepts disclosed allow relatively small multiports 200 having a relatively high-density of connections along with an organized arrangement for connectors 10 attached to the multiports 200. Shells have a given height H, width W and length L that define a volume for the multiport as depicted in **FIG. 3**. By way of example, shells 210 of multiport 200 may define a volume of 800 cubic centimeters or less, other embodiments of shells 210 may define the volume of 400 cubic centimeters or less, other embodiments of shells 210 may define the volume of 100 cubic centimeters or less as desired. Some embodiments of multiports 200 comprise a connection port insert 230 having a port width density of at least one connection port 236 per 20 millimeters of width W of the multiport 200. Other port width densities are possible such as 15 millimeters of width W of the multiport. Likewise, embodiments of multiports 200 may comprise a given density per volume of the shell 210 as desired.

The concepts disclosed allow relatively small form-factors for multiports as shown in Table 1. Table 1 below compares representative dimensions, volumes, and normalized volume ratios with respect to the prior art of the shells (i.e., the housings) for multiports having 4, 8 and 12 ports as examples of how compact the multiports of the present application are with respect to convention prior art multiports. Specifically, Table 1 compares examples of the conventional prior art multiports such as depicted in FIG. 1 with multiports having a linear array of ports. As depicted, the respective volumes of the conventional prior art multiports of **FIG. 1** with the same port count are on the order of ten times larger than multiports with the same port count as disclosed herein. By way of example and not limitation, the multiport may define a volume of 400 cubic centimeters or less for 12-ports, or even if double the size could define a volume of 800 cubic centimeters or less for 12-ports. Multiports with smaller port counts such as 4-ports could be even smaller such as the shell or multiport defining a volume of 200 cubic centimeters or less for 4-ports, or even if double the size could define a volume of 200 cubic centimeters or less for 4-ports. Devices with sizes that are different will have different volumes form the explanatory examples in Table 1 and these other variations are within the scope of the disclosure. Consequently, it is apparent the size (e.g., volume) of multiports of the present application are much smaller than the conventional prior art multiports of **FIG.1**. In addition to being significantly smaller, the multiports of the present application do not have the issues of the conventional prior art multiports depicted in **FIG. 2**. Of course, the examples of Table 1 are for comparison purposes and other sizes and variations of multiports may use the concepts disclosed herein as desired.

One of the reasons that the size of the multiports may be reduced in size with the concepts disclosed herein is that the connectors that cooperate with the multiports have locking features that are integrated into the housing 20 of the connectors 10. In other words, the locking features for securing connector are integrally formed in the housing of the connector, instead of being a distinct and separate component like a coupling nut of a conventional hardened connector used with conventional multiports. Conventional connectors for multiports have threaded connections that require finger access for connection and disconnecting. By eliminating the threaded coupling nut (which is a separate component that must rotate about the connector) the spacing between conventional connectors may be reduced. Also eliminating the dedicated coupling nut from the conventional connectors also allows the footprint of the connectors to be smaller, which also aids in reducing the size of the multiports disclosed herein.

**Table 1: Comparison of Conventional Multiport of FIG. 1 with Multiports of Present Application**

| Multiport Type | Port Count | Dimension LxWxH (mm) | Volume (cm³) | Normalized Volume Ratio |
|---|---|---|---|---|
| Prior Art FIG. 1 | 4 | 274 x 66 x73 | 1320 | 1.0 |
| | 8 | 312 x 76 x 86 | 2039 | 1.0 |
| | 12 | 381 x 101 x 147 | 5657 | 1.0 |
| Linear | 4 | 76 x 59 x 30 | 134 | 0.10 |
| | 8 | 123 x 109 x 30 | 402 | 0.20 |
| | 12 | 159 x 159 x 30 | 758 | 0.14 |

Multiport or Devices may have other constructions using the concepts disclosed. **FIGS. 33-47** depict views of another explanatory device 200 configured as a multiport that comprises a plurality of connection ports 236 along with a plurality of securing features 310, each securing feature 310 associated with the respective connection port 236 that is similar to the multiport 200 of **FIGS. 3** **and** **4**.

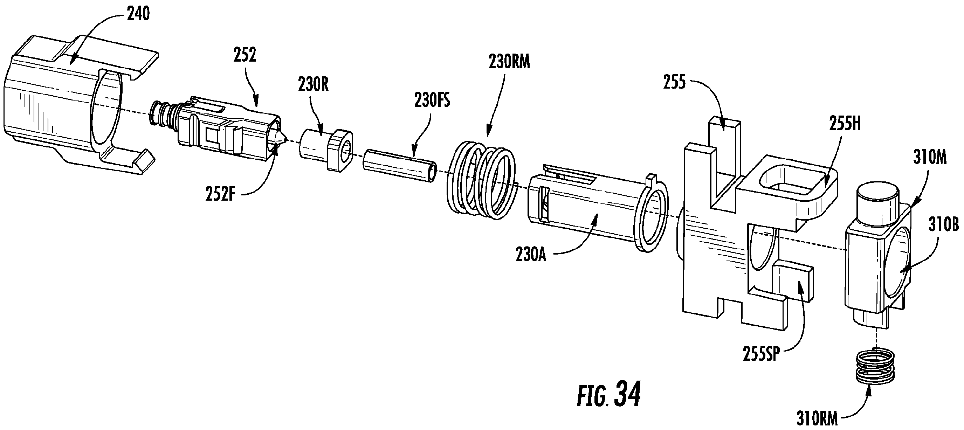

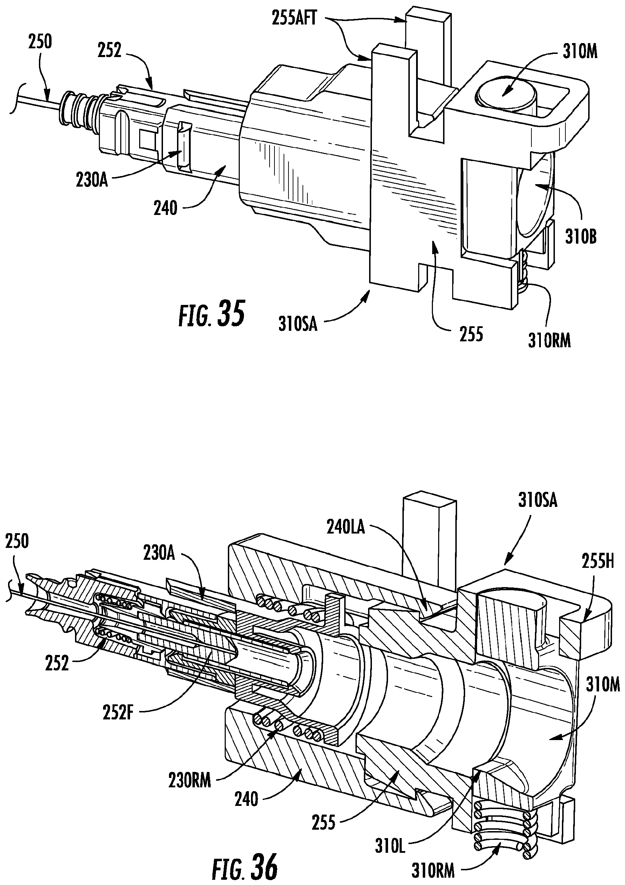

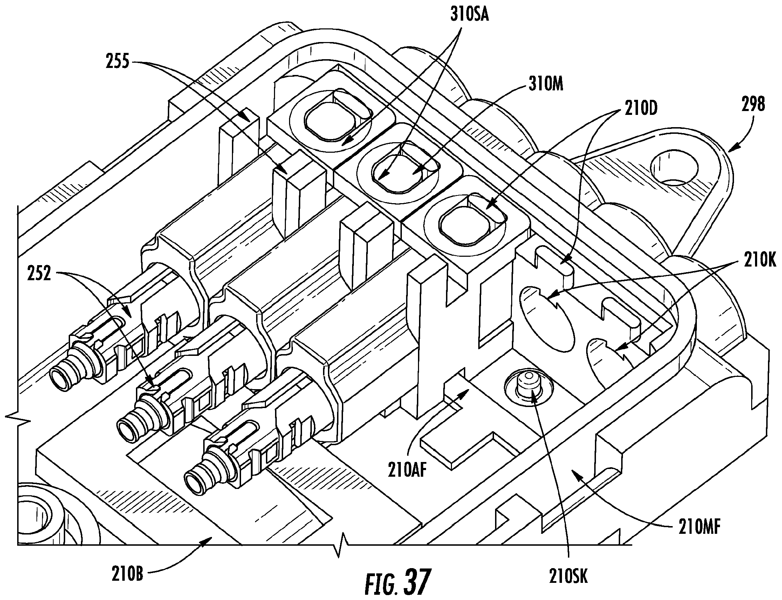

**FIG. 33** depicts a partially exploded view of another multiport 200 that is similar to multiport 200 of **FIGS. 3** **and** **4** and has the optical fibers 250 removed for clarity, and **FIGS. 34-36** are views of the modular adapter sub-assembly 310SA of the multiport 200 of **FIG. 33****.** **FIG. 37** shows the modular adapter sub-assemblies 310SA of **FIG. 35** being loaded into the second portion 210B of the shell 210.

Like, the multiport 200 of **FIGS. 3** **and** **4**, this securing feature 310 comprises an actuator 310A and a securing member 310M with the securing member 310M being a portion of a modular adapter sub-assembly 310SA for ease of assembly and isolation of the retaining mechanisms so they can float independently. The securing feature member 310M of securing feature 310 is suitable for retaining connector in connection port 236 as discussed herein. Various different embodiments are possible for securing features 310 comprising more than one component for the devices disclosed.

Multiport 200 of **FIG. 33** comprise one or more connection ports 236 and the one or more securing feature passageways 245 as a portion of the shell 210. Multiport 200 of **FIG. 33** comprises a shell 210 comprising a body 232 with one or more connection ports 236 disposed on a first end or portion 212 with each connection port 236 comprising a respective optical connector opening 238. The optical connector openings 238 extend from an outer surface 234 of shell 210 into a cavity 216 and define a connection port passageway 233. One or more respective securing feature passsageways 245 extend from the outer surface 234 of the shell 210 to the respective connection port passageways 233. A plurality of security features 310 are associated with the respective plurality of connection ports 236. As depicted, shell 210 is formed by a first portion 210A and a second portion 210B.

**FIGS. 34-36** are views of the modular adapter sub-assembly 310SA of the multiport 200 of **FIG. 33**, that is similar to the modular adapter sub-assembly 310SA used in the multiport 200 of **FIGS. 3** **and** **4**. The main difference in the modular adapter sub-assembly of **FIGS. 34-36** are in the design of the adapter body 255. In this adapter body 255 the securing feature resilient member 310RM is not capture in a resilient member pocket of the adapter body 255. Instead, the second shell 210B comprises a spring keeper 210SK adjacent to the respective connection port 236 best shown in **FIG. 37**. This may make the assembly of the multiport 200 more challenging. Additionally, adapter body 255 of the multiport 200 of **FIG. 33** has different alignment feature 255Af on the bottom of the adapter body 255.

**FIG. 37** is a top detailed perspective view of the modular adapter subassemblies of **FIG. 35** being loaded into the second portion 210B of the shell 210 with the optical fibers removed for clarity. As best shown in **FIG. 37**, the modular sub-assembles 310SA are individually placed into the second portion 210B of shell 210 after the securing feature resilient member 310RM is place about the spring keeper 210SK. As shown the alignment features 210AF of the second portion 210B of shell 210 align the modular adapter sub-assembly 310SA with the respective connection ports 236. In this embodiment, the alignment features 210AF are configured as a T-rail for seating the adapter body 255.

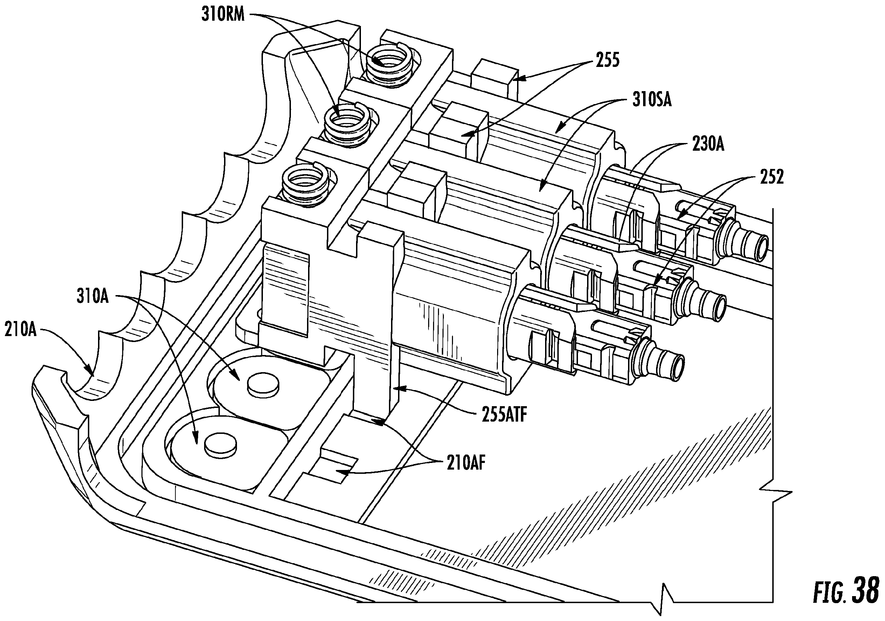

**FIG. 38** is a detailed perspective view showing how the features of the modular adapter sub-assemblies 310SA of **FIG. 35** engage the first portion 210A of the shell 210 when assembled. **FIG. 38** depicts a partial assembled view of multiport 200 of **FIGS. 33** showing the respective actuators 310A placed into securing feature passageways 245 within the first portion 210A of the shell 210 and the modular subassemblies 310SA being placed on the first portion 210A of the shell. This view is shown to depict the cooperating geometry between the modular sub-assembles 310SA and the first portion 210A of shell 210. Like the other multiport 200, first portion 210A of shell 210 also comprises alignment features 210AF sized and shaped for cooperating with the alignment features 255AFT on the top of adapter body 255 for securing the same when the multiport is assembled. The respective alignment features 210AF,255AF only allow assembly of the modular adapter sub-assemblies 310AS into the shell 210 in one orientation for the correct orientation of the locking feature 310L with respect to the connection port 236. This view also shows that actuators 310A have a different geometry since they do not have a completely round form-factor like the actuators 310A shown in **FIGS.19 and 20**. After the internal assembly is completed, the first and second portions 210A,210B of shell 210 may assembled in suitable fashion using a sealing element 290 or not.

**FIG. 39** is a detailed sectional views of the multiport 200 of **FIGS. 33** through the connection port for showing the internal construction of the multiport with a fiber optic connector retained using the securing feature 310. As shown in **FIG. 39**, the connector mating plane 230MP between the ferrule of the rear connector 252 and ferrule of connector 10 is disposed within the cavity 216 multiport 200 for protecting the connector mating interface. Specifically, the respective ferrules are aligned using the ferrule sleeve 230FS. Connector 10 includes a locking feature 20L on the housing 20 for cooperating with a securing feature 310 of multiport 200. This arrangement is similar for retaining connectors 10 in the multiport 200 of **FIGS. 3** **and** **4**. Connector 10 comprises at least one O-ring 65 for sealing with the connector port passageway 233 at a sealing surface when the connector 10 is fully inserted into the connection port 236.

**FIGS. 40A and 40B** depicts the use of an input tether 270 with multiport 200. The concepts disclosed may be used with the pass-through cables as well. Input tether 270 has optical fibers 250 that enter the multiport 200 and are terminated with to rear connectors 252 for making an optical connection at the connection port 236. In this embodiment, there is no securing feature for the input connection port 260. However, other embodiments may retain the securing feature and secure the input tether 270 from inside the device.

If used, input tether 270 may terminate the other end with a fiber optic connector or be a stubbed cable as desired. For instance, the input tether connector could be an OptiTip^{®} connector for optical connection to previously installed distribution cables; however, other suitable single-fiber or multi-fiber connectors may be used for terminating the input tether 270 as desired. Input tether 270 may be secured to the multiport 200 in other suitable manners inside the multiport such as adhesive, a collar or crimp, heat shrink or combinations of the same. In other embodiments, the input tether could be secured using a securing member internal to the shell without the actuator as shown. The input tether to multiport interface could also be weatherproofed in a suitable manner. The input tether 270 may also have stubbed optical fibers for splicing in the field if desired, instead of the connector 278.

Furthermore, the input tether 270 may further comprise a furcation body that has a portion that fits into the multiport 200 at the input port of the shell 210 such as into the optical connector opening 238 of the input connection port 260, but the furcation body may be disposed within the shell 210 if desired as well. The furcation body is a portion of the input tether that transitions the optical fibers 250 to individual fibers for routing within the cavity 216 of the shell 210 to the respective connector ports. As an example, a ribbon may be used for insertion into the back end of the ferrule of fiber optic connector 278 and then be routed through the input tether 270 to the furcation body where the optical fibers are then separated out into individual optical fibers 250. From the furcation body the optical fibers 250 may be protected with a buffer layer or not inside the cavity 216 of the multiport 200 and then terminated on rear connector 252 as desired.

The input tether 270 may be assembled with the rear connectors 252 and/or fiber optic connector 278 in a separate operation from the assembly of multiport 200 if the rear connectors 252 fit through the input port. Thereafter, the rear connectors 252 may be individually threaded into the input connection port 260 of the multiport with the appropriate routing of the optical fiber slack and then have the rear connectors 252 attached to the appropriate structure for optical communication with the connection port passageways 233 of the multiport 200. The furcation body may also be secured to the connection port insert in the manner desired. By way of explanation, the input tether may be secured to shell 210 using a collar that fits into a cradle. This attachment of the input tether using collar and cradle provides improved pull-out strength and aids in manufacturing; however, other constructions are possible for securing the input tether.

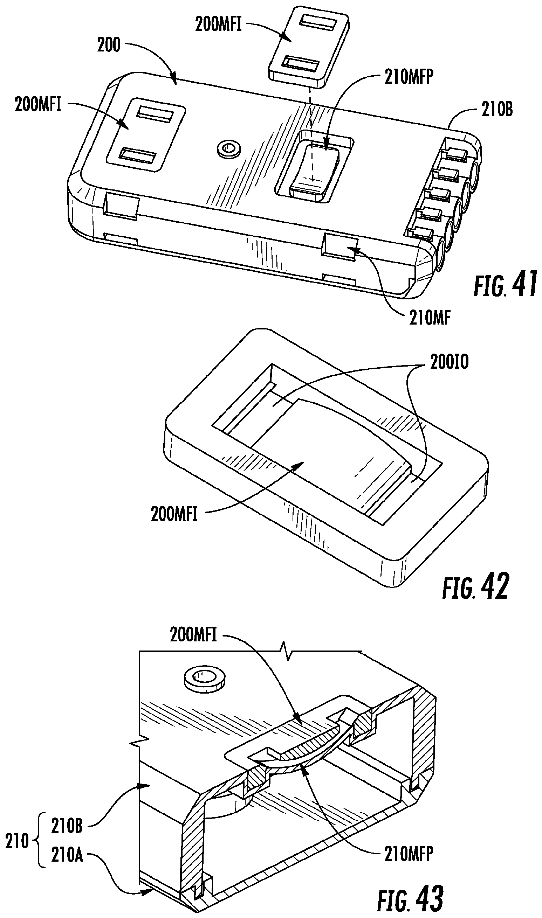

**FIGS. 41-43** depict various views of a mounting feature insert 200MFI that may be attached to a portion of the shell 210 for securing the device such as with a band or tie-strap. **FIG. 41** shows the bottom of the second portion 210B of shell 210 comprising one or more pockets 210MFP. As shown, mounting feature insert 200MFI cooperates with a suitable pocket 210MF to snap-fit together with a band for securing the multiport to a pole or the like. **FIG. 42** depicts the mounting feature insert 200MFI comprising insert openings 200IO disposed on opposite sides of a curved saddle for receiving a band or strap, and **FIG. 43** is a cross-sectional view of the cooperation between mounting feature insert 200MFI and the second portion 210B of shell 210.

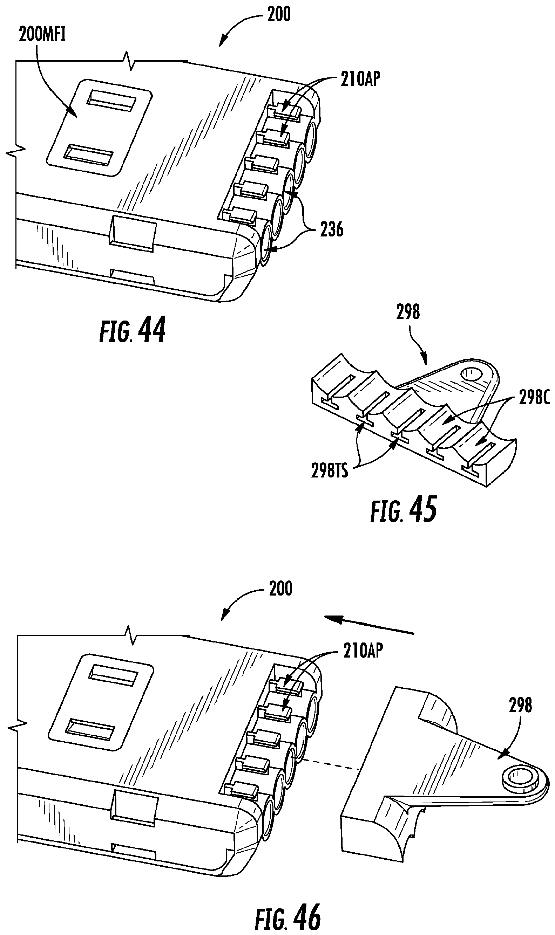

**FIGS. 44-46** depict various views of a mounting feature 298 that may be attached to the front end of the second portion 210B of the shell 210 similar to the other mounting tab 298 disclosed. **FIG. 44** depicts alignment protrusions 210AP on the front end 212 of second portion 210B of shell 210 for securing mounting tab 298. Alignment protrusions are configured as T-rails in this embodiment, but other geometry is possible. Specifically, alignment protrusions 210AP cooperate with a plurality of T-rail slots on mounting tab 298 as shown in **FIG. 45** for aligning and attaching the mounting tab to the shell 210 of the multiport 200. Mounting tab 298 may be attached to the shell 210 as shown in **FIG. 46****,** and adhesive or fastener may be used as desired. Other variations of for the mounting tab are possible.

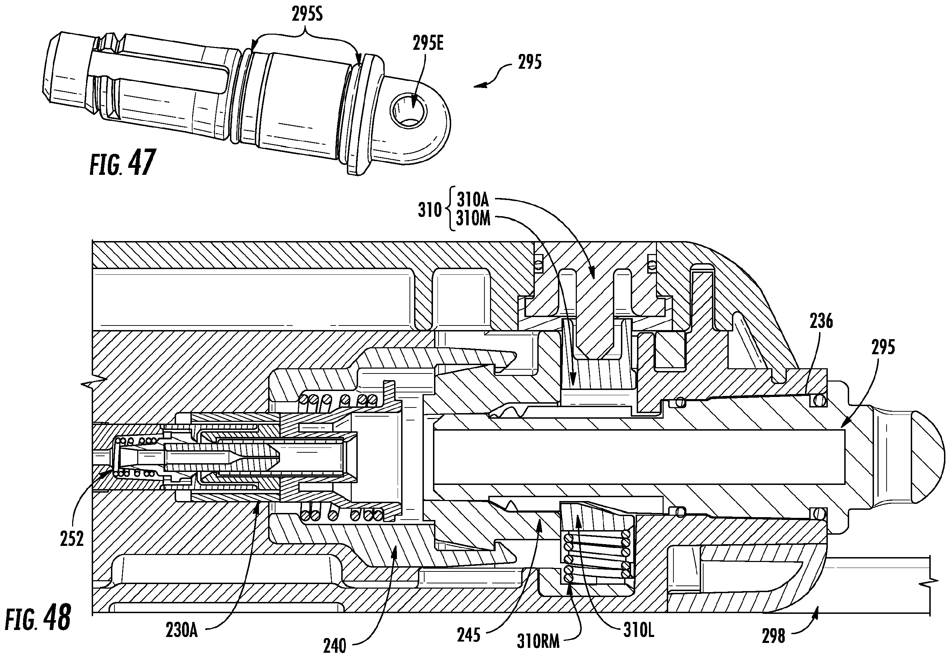

As shown in **FIGS. 47 and 48****,** multiports 200 may also have one or more dust caps 295 for protecting the connection port 236 or input connection ports 260 from dust, dirt or debris entering the multiport or interfering with the optical performance. Thus, when the user wishes to make an optical connection to the multiport, the appropriate dust cap 295 is removed from the connector port 236 and then connector 10 of cable assembly 100 may be inserted into the respective connection port 236 for making an optical connection to the multiport 200. Dust caps 295 may use similar release and retain features as the connectors 10. By way of explanation, when securing feature 310 is pushed inward or down, the dust cap 295 is released and may be removed. Moreover, the interface between the connection ports 236 and the dust cap or connector 10 may be sealed using appropriate geometry and/or a sealing element such as an O-ring or gasket.

**FIG. 49** is a perspective view of a wireless device 500 not covered by the present invention having a similar construction to the concepts disclosed herein and comprising at least one connector port 236 associated with securing member 310. Wireless device 500 may have a securing feature resilient member 310RM for biasing a portion of the securing feature 310. Wireless device 500 may comprise one or more connection ports 236 disposed on the portion of shell 210 as shown in **FIG. 49**. Wireless device 500 may have an input port that includes power and may have electronics 500E (not visible) disposed with in the cavity (not visible) of the device. The wireless device 500 may have any of the other features disclosed herein and they will not be repeated for the sake of brevity.

Still other devices are possible according to the concepts disclosed. **FIG. 50** is a perspective view of a closure 700 not covered by the present invention comprising at least one connector port 236 and associated securing member 310. Like wireless device 500, closure 700 may comprise one or more connection ports 236 disposed on the portion of shell 210 as shown in **FIG. 50**. Closure 700 may also have a securing feature resilient member 310RM for biasing a portion of the securing feature 310. Closure 700 may have one or more input ports or include other components disposed with in the cavity (not visible) of the device as disclosed herein. The closure 700 may have any of the other features disclosed herein and they will not be repeated for the sake of brevity.

Methods for making devices 200, 500 and 700 are also disclosed herein. The methods disclosed may further include installing at least one securing feature 310 into a device 200, 500 and 700 so that the at least one securing feature 310 is associated with connection port 236. The securing feature 310 may translate between an open position OP and a retain position RP, and at least one securing feature resilient member (310RM) is positioned for biasing a portion of the at least one securing feature (310) to a retain position RP.

The methods may further comprise the securing feature (310) comprising a locking feature 310L. The locking feature further comprise a ramp with a ledge.

The methods may further comprise at least one securing feature (310) translating from a retain position (RP) to an open position (OP) as a suitable fiber optic connector (10) is inserted into the at least one connection port (236).

The method may further comprise securing feature 310 being capable of moving to a retain position RP automatically when a suitable fiber optic connector is fully-inserted into the at least one connector port passageway 233.

The method may further comprise translating the securing feature 310 for moving the securing feature 310 to the open position OP from a normally-biased closed position CP.

## Claims

1. A multiport (200) for making an optical connection, comprising:
a shell (210);
a plurality of connection ports (236) disposed on the multiport (200) with each connection port (236) comprising an optical connector opening (238) extending from an outer surface (234) of the multiport (200) into a cavity (216) of the multiport (200) and defining a connection port passageway (233), wherein each connection port (236) is a portion of the shell (210);
a plurality of modular adapter subassemblies (310SA) disposed within the shell (210);
**characterized in that** the multiport (200) comprises:
a plurality of securing features (310) with each securing feature (310) capable of translating and being associated with a respective connection port passageway (233) for releasing and securing a suitable external fiber optic connector (10) in the respective connection port passageway (233) for making the optical connection, wherein a portion of each securing feature (310) is part of a respective modular adapter sub-assembly (310SA);
and
a plurality of securing feature resilient members (310RM) for biasing a portion of the respective securing feature (310).

2. The multiport (200) of claim 1, wherein each securing feature (310) is biased to a retain position (RP).

3. The multiport (200) of claim 1 or 2, wherein each securing feature (310) comprises a bore (310B) that is aligned with the respective connection port passageway (233), and wherein the bore (310B) is sized for receiving the suitable external fiber optic connector (10) therethrough for securing the same.

4. The multiport (200) claim 3, wherein each securing feature (310) translates from a retain position (RP) to an open position (OP) as the suitable external fiber optic connector (10) is inserted into the respective connection port (236).

5. The multiport (200) of any one of claims 1-4, wherein each securing feature (310) is capable of releasing the suitable external fiber optic connector (10) when translating to an open position (OP).

6. The multiport (200) of any one of claims 1-5, wherein each securing feature (310) is capable of moving to a retain position (RP) automatically when the suitable external fiber optic connector (10) is fully-inserted into the respective connector port passageway (233).

7. The multiport (200) of any one of claims 1-6, wherein each securing feature (310) further comprises a locking feature (310L) suitable for cooperating with a portion of the suitable external fiber optic connector (10) inserted into the respective connection port (236) for securing the same.

8. The multiport (200) of claim 7, wherein the respective locking feature (310L) comprises a ramp (310RP) with a ledge.

9. The multiport (200) of claim 8, wherein the ramp (310RP) is integrally formed at a portion of the bore (310B) with the ramp angling up when looking into the respective connection port (236).

10. The multiport (200) of any one of claims 1-9, wherein each securing feature (310) comprises an actuator (310A) and a securing member (310M), and wherein the respective actuator (310A) is capable of translating within a portion of a securing feature passageway (245).

11. The multiport (200) of claim 10, wherein the respective actuator (310A) comprises a finger (310F) for seating within a rim (310R) of securing member (310M) for transferring forces to the same.

12. The multiport (200) of claim 10 or 11, wherein a sealing feature (310S) is disposed on the respective securing feature (310), wherein the respective sealing feature (310S) provides a seal between a portion of the respective securing feature (310) and the respective securing feature passageway (245) to inhibit dirt, dust and debris from entering the multiport, and wherein the sealing feature (310S) is disposed within a groove of the respective actuator (310A).

13. The multiport (200) of claim 10, 11 or 12, wherein each securing member (310M) is part of the modular adapter sub-assembly (310SA).

14. The multiport (200) of any one of claims 1-13, wherein each modular adapter sub-assembly (310SA) capable of floating relative to the respective connection ports passageway (233).

15. The multiport (200) of any one of claims 1-14, wherein the multiport (200) has a port width density of at least one connection port (236) per each 20 millimeters of width (W) of the multiport (200).

## Patentansprüche

1. Multiport (200) zum Herstellen einer optischen Verbindung, umfassend:
ein Gehäuse (210);
eine Vielzahl von Verbindungsanschlüssen (236), die am Multiport (200) eingerichtet sind, wobei jeder Verbindungsanschluss (236) eine Öffnung (238) für einen optischen Verbinder umfasst, die sich von einer Außenfläche (234) des Multiports (200) in einen Hohlraum (216) des Multiports (200) erstreckt und einen Verbindungsanschlussdurchgang (233) definiert, wobei jeder Verbindungsanschluss (236) ein Abschnitt des Gehäuses (210) ist;
eine Vielzahl von modularen Adapterteilanordnungen (310SA), die innerhalb des Gehäuses (210) eingerichtet sind;
**dadurch gekennzeichnet, dass** der Multiport (200) umfasst:
eine Vielzahl von Sicherungsmerkmalen (310), wobei jedes Sicherungsmerkmal (310) in der Lage ist, verschoben und einem jeweiligen Verbindungsanschlussdurchgang (233) zugeordnet zu werden, zu dem Zweck, einen geeigneten externen faseroptischen Verbinder (10) im jeweiligen Verbindungsanschlussdurchgang (233) freizugeben und zum Herstellen der optischen Verbindung zu befestigen, wobei ein Abschnitt jedes Sicherungsmerkmals (310) Teil einer jeweiligen modularen Adapterteilanordnung (310SA) ist;
eine Vielzahl von elastischen Sicherungsmerkmal-Elementen (310RM) zum Vorspannen eines Abschnitts des jeweiligen Sicherungsmerkmals (310).

2. Multiport (200) nach Anspruch 1, wobei jedes Sicherungsmerkmal (310) in eine Halteposition (RP) vorgespannt ist.

3. Multiport (200) nach Anspruch 1 oder 2, wobei jedes Sicherungsmerkmal (310) eine Bohrung (310B) umfasst, die mit dem jeweiligen Verbindungsanschlussdurchgang (233) fluchtet, und wobei die Bohrung (310B) so bemessen ist, dass sie den geeigneten externen faseroptischen Verbinder (10) zu seiner Sicherung durch sie hindurch aufnehmen kann.

4. Multiport (200) nach Anspruch 3, wobei jedes Sicherungsmerkmal (310) von einer Halteposition (RP) in eine offene Position (OP) übergeht, wenn der geeignete externe faseroptische Verbinder (10) in den jeweiligen Verbindungsanschluss (236) eingeführt wird.

5. Multiport (200) nach einem der Ansprüche 1 bis 4, wobei jedes Sicherungsmerkmal (310) in der Lage ist, den geeigneten externen faseroptischen Verbinder (10) freizugeben, wenn er in eine offene Position (OP) verschoben wird.

6. Multiport (200) nach einem der Ansprüche 1 bis 5, wobei jedes Sicherungsmerkmal (310) in der Lage ist, sich automatisch in eine Halteposition (RP) zu bewegen, wenn der geeignete externe faseroptische Verbinder (10) vollständig in den jeweiligen Verbinderanschlussdurchgang (233) eingeführt wird.

7. Multiport (200) nach einem der Ansprüche 1 bis 6, wobei jedes Sicherungsmerkmal (310) ferner ein Verriegelungsmerkmal (310L) umfasst, das geeignet ist, mit einem Abschnitt des geeigneten externen faseroptischen Verbinders (10), der in den jeweiligen Verbindungsanschluss (236) eingeführt ist, zum Sichern desselben zusammenzuwirken.

8. Multiport (200) nach Anspruch 7, wobei das jeweilige Verriegelungsmerkmal (310L) eine Rampe (310RP) mit einer Stufe umfasst.

9. Multiport (200) nach Anspruch 8, wobei die Rampe (310RP) einstückig an einem Abschnitt der Bohrung (310B) ausgebildet ist, wobei die Rampe beim Blick in den jeweiligen Verbindungsanschluss (236) nach oben geneigt ist.

10. Multiport (200) nach einem der Ansprüche 1 bis 9, wobei jedes Sicherungsmerkmal (310) ein Betätigungselement (310A) und ein Sicherungselement (310M) umfasst, und wobei das jeweilige Betätigungselement (310A) in der Lage ist, innerhalb eines Abschnitts eines Sicherungsmerkmalsdurchgangs (245) verschoben zu werden.

11. Multiport (200) nach Anspruch 10, wobei das jeweilige Sicherungselement (310A) einen Finger (310F) umfasst, der in einem Rand (310R) des Sicherungselements (310M) sitzt, zu dem Zweck, Kräfte darauf zu übertragen.

12. Multiport (200) nach Anspruch 10 oder 11, wobei ein Dichtungsmerkmal (310S) am jeweiligen Sicherungsmerkmal (310) eingerichtet ist, wobei das jeweilige Dichtungsmerkmal (310S) eine Dichtung zwischen einem Abschnitt des jeweiligen Sicherungsmerkmals (310) und dem jeweiligen Sicherungsmerkmalsdurchgang (245) bereitstellt, um zu verhindern, dass Schmutz, Staub und Ablagerungen in den Multiport eindringen, und wobei das Dichtungsmerkmal (310S) innerhalb einer Nut des jeweiligen Betätigungselements (310A) eingerichtet ist.

13. Multiport (200) nach Anspruch 10, 11 oder 12, wobei jedes Sicherungselement (310M) Teil der modularen Adapterteilanordnung (310SA) ist.

14. Multiport (200) nach einem der Ansprüche 1 bis 13, wobei jede modulare Adapterteilanordnung (310SA) in der Lage ist, relativ zum jeweiligen Verbindungsanschlussdurchgang (233) zu gleiten.

15. Multiport (200) nach einem der Ansprüche 1 bis 14, wobei der Multiport (200) eine Anschlussbreitendichte von mindestens einem Verbindungsanschluss (236) pro jeweils 20 Millimeter Breite (W) des Multiports (200) aufweist.

## Revendications

1. Multiport (200) destiné à établir une connexion optique, comportant :
une coque (210) ;
une pluralité de ports (236) de connexion disposés sur le multiport (200), chaque port (236) de connexion comportant une ouverture (238) de connecteur optique s'étendant d'une surface extérieure (234) du multiport (200) jusque dans une cavité (216) du multiport (200) et définissant un passage (233) de port de connexion, chaque port (236) de connexion étant une partie de la coque (210) ;
une pluralité de sous-ensembles (310SA) d'adaptateurs modulaires disposés à l'intérieur de la coque (210) ;
**caractérisé en ce que** le multiport (200) comporte :
une pluralité d'éléments (310) de fixation, chaque élément (310) de fixation étant susceptible de translater et d'être associé à un passage respectif (233) de port de connexion pour libérer et fixer un connecteur (10) de fibre optique externe approprié dans le passage respectif (233) de port de connexion pour établir la connexion optique, une partie de chaque élément (310) de fixation faisant partie d'un sous-ensemble (310SA) d'adaptateur modulaire respectif ;
une pluralité d'organes élastiques (310RM) d'éléments de fixation servant à solliciter une partie de l'élément (310) de fixation respectif.

2. Multiport (200) selon la revendication 1, chaque élément (310) de fixation étant sollicité vers une position de retenue (RP).

3. Multiport (200) selon la revendication 1 ou 2, chaque élément (310) de fixation comportant un alésage (310B) qui est aligné avec le passage respectif (233) de port de connexion, et l'alésage (310B) étant dimensionné pour recevoir le connecteur (10) de fibre optique externe approprié à travers celui-ci pour le fixer.

4. Multiport (200) selon la revendication 3, chaque élément (310) de fixation translatant d'une position de retenue (RP) à une position ouverte (OP) à mesure que le connecteur (10) de fibre optique externe approprié est inséré dans le port (236) de connexion respectif.

5. Multiport (200) selon l'une quelconque des revendications 1 à 4, chaque élément (310) de fixation étant susceptible de libérer le connecteur (10) de fibre optique externe approprié lorsqu'il translate jusqu'à une position ouverte (OP).

6. Multiport (200) selon l'une quelconque des revendications 1 à 5, chaque élément (310) de fixation étant susceptible de se déplacer automatiquement jusqu'à une position de retenue (RP) lorsque le connecteur (10) de fibre optique externe approprié est entièrement inséré dans le passage respectif (233) de port de connexion.

7. Multiport (200) selon l'une quelconque des revendications 1 à 6, chaque élément (310) de fixation comportant en outre un élément (310L) de verrouillage approprié pour coopérer avec une partie du connecteur (10) de fibre optique externe approprié inséré dans le port (236) de connexion respectif pour le fixer.

8. Multiport (200) selon la revendication 7, l'élément respectif (310L) de verrouillage comportant une rampe (310RP) dotée d'un rebord.

9. Multiport (200) selon la revendication 8, la rampe (310RP) étant formée de manière intégrée au niveau d'une partie de l'alésage (310B), la rampe étant en pente ascendante dans une vue vers l'intérieur du port (236) de connexion respectif.

10. Multiport (200) selon l'une quelconque des revendications 1 à 9, chaque élément (310) de fixation comportant un actionneur (310A) et un organe immobilisateur (310M), et l'actionneur (310A) respectif étant susceptible de translater à l'intérieur d'une partie d'un passage (245) d'élément de fixation.

11. Multiport (200) selon la revendication 10, l'actionneur (310A) respectif comportant un doigt (310F) destiné à prendre appui à l'intérieur d'un pourtour (310R) de l'organe immobilisateur (310M) pour transférer des efforts à celui-ci.

12. Multiport (200) selon la revendication 10 ou 11, un élément (310S) d'étanchéité étant disposé sur l'élément (310) de fixation respectif, l'élément respectif (310S) d'étanchéité assurant une étanchéité entre une partie de l'élément (310) de fixation respectif et le passage respectif (245) d'élément de fixation pour empêcher des salissures, de la poussière et des débris d'entrer dans le multiport, et l'élément (310S) d'étanchéité étant disposé à l'intérieur d'une rainure de l'actionneur (310A) respectif.

13. Multiport (200) selon la revendication 10, 11 ou 12, chaque organe immobilisateur (310M) faisant partie du sous-ensemble (310SA) d'adaptateur modulaire.

14. Multiport (200) selon l'une quelconque des revendications 1 à 13, chaque sous-ensemble (310SA) d'adaptateur modulaire étant susceptible de flotter par rapport au passage respectif (233) de port de connexion.

15. Multiport (200) selon l'une quelconque des revendications 1 à 14, le multiport (200) présentant une densité de ports en largeur d'au moins un port (236) de connexion par 20 millimètres de largeur (W) du multiport (200) .
